# EUROPEAN PATENT APPLICATION

(11) **EP 4 408 079 A1**
(43) Date of publication of application: **31.07.2024**
(21) Application number: 22882759.8
(22) Date of filing: 14.10.2022
(51) Int. Cl.: H04W 52/02

(54) **METHOD AND APPARATUS FOR INFORMATION TRANSMISSION**

(30) Priority: 21.10.2021 CN 202111227046; 17.11.2021 CN 202111364467
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN)
(74) Representative: Pfenning, Meinig & Partner mbB
(86) International application number: PCT/CN2022/125345
(87) International publication number: WO 2023/066152

(57) **Abstract**

Embodiments of this application provide an information transmission method and an apparatus. The method may include: A terminal device receives area identification information from a network device through a first frequency resource; and the terminal device performs an area update procedure or receives system information based on the area identification information through a second frequency resource. According to this application, transmitting common information on a WUR link can prolong working duration of the terminal device on the WUR link, improve energy saving benefit, and reduce an access delay of the terminal device. The method provided in embodiments may be applied to communication systems such as 5G or NR, LTE, V2X, D2D, M2M, MTC, and the internet of things.

## Description

This application claims priorities to Chinese Patent Application No. 202111364467.0, filed with the China National Intellectual Property Administration on November 17, 2021 and entitled "INFORMATION TRANSMISSION METHOD AND APPARATUS", and to Chinese Patent Application No. 202111227046.3, filed with the China National Intellectual Property Administration on October 21, 2021 and entitled "WUR FORMAT DESIGN METHOD", both of which are incorporated herein by reference in their entireties.

### TECHNICAL FIELD

This application relates to the communication field, and more specifically, to an information transmission method and an apparatus.

### BACKGROUND

A terminal device may receive a wake-up signal via a separate low-power small circuit, for example, a wake-up receiver (wake-up receiver, WUR), and a main receiver may be in a deep sleep state. After the terminal device detects the wake-up signal via the WUR, the terminal device triggers wake-up of the main receiver. After the main receiver is woken up, the terminal device may perform a paging (paging) receiving process via the main receiver, for example, receiving a paging message. Currently, there is no solution to reveal a specific function of the WUR.

### SUMMARY

This application provides an information transmission method and an apparatus. In this way, transmitting common information on a WUR link can prolong working duration of a terminal device on the WUR link, improve energy saving benefit, and reduce an access delay of the terminal device.

According to a first aspect, an information transmission method is provided. The method may be performed by a terminal device, or may be performed by a component (for example, a chip or a circuit) of a terminal device. This is not limited. For ease of description, an example in which the method is performed by the terminal device is used below for description.

The method may include: The terminal device receives area identification information from a network device through a first frequency resource; and the terminal device performs an area update procedure or receives system information based on the area identification information through a second frequency resource.

Based on the foregoing solution, the terminal device can receive the area identification information from the network device through the first frequency resource, and the terminal device performs the area update procedure or receives the system information based on the area identification information through the second frequency resource. A WUR and a main receiver are used as examples. The terminal device can receive the area identification information from the network device via the WUR, to prolong working duration of the terminal device on a WUR link, and improve energy saving benefit. In addition, if the terminal device finds that the terminal device has entered a new area, the terminal device may enable the main receiver to perform an area update procedure or receive changed system information, so that a network side is prevented from being incapable of paging the terminal device, or the terminal device can receive correct system information in time, to reduce an access delay after the terminal device is paged.

With reference to the first aspect, in some implementations of the first aspect, the area identification information includes a tracking area identifier, and that the terminal device performs an area update procedure or receives system information based on the area identification information through a second frequency includes: When the terminal device determines, based on the tracking area identifier, that a tracking area of the terminal device is updated, the terminal device performs a tracking area update procedure through the second frequency resource.

Based on the foregoing solution, the terminal device receives the tracking area identifier via the WUR. If the terminal device finds that the terminal device has entered a new tracking area, the terminal device may enable the main receiver to perform a tracking area update process, so as to notify the network side of the new tracking area in which the terminal device is located. This prevents the network side from being incapable of paging the terminal device.

With reference to the first aspect, in some implementations of the first aspect, the area identification information includes an access network area identifier, and that the terminal device performs an area update procedure or receives system information based on the area identification information through a second frequency includes: When the terminal device determines, based on the access network area identifier, that an access network area of the terminal device is updated, the terminal device performs an access network area update procedure through the second frequency resource.

Based on the foregoing solution, the terminal device receives the access network area identifier via the WUR. If the terminal device finds that the terminal device has entered a new access network area, the terminal device may enable the main receiver to perform an access network area update process, so as to notify the network side of the new access network area in which the terminal device is located. This prevents the network side from being incapable of paging the terminal device.

With reference to the first aspect, in some implementations of the first aspect, the area identification information includes a cell identifier, and that the terminal device performs an area update procedure or receives system information based on the area identification information through a second frequency includes: When the terminal device determines, based on the cell identifier, that a cell of the terminal device is updated, the terminal device receives, through the second frequency resource, system information of a cell indicated by the cell identifier.

Based on the foregoing solution, the terminal device receives the cell identifier via the WUR. If the terminal device finds that the terminal device has entered a new cell, the terminal device may enable the main receiver to receive system information of the new cell, so that the terminal device can receive correct system information in time, to reduce the access delay after the terminal device is paged. For example, if the terminal device does not obtain the system information in time, after receiving paging via the WUR, the terminal device needs to first receive the system information of the new cell, and can receive information (The information is, for example, first information. For example, the first information includes one or more of the following information: paging downlink control information DCI, a paging message paging message, and a paging early indication PEI.) from the main receiver only after learning a paging configuration of a current cell, or can initiate random access only after learning a random access configuration of a current cell. If the terminal device can obtain the system information in advance, after receiving the paging via the WUR, the terminal device can directly receive the first information from the main receiver or directly initiate random access, to reduce a delay.

With reference to the first aspect, in some implementations of the first aspect, that a terminal device receives area identification information from a network device through a first frequency resource includes: The terminal device receives a first signal from the network device through the first frequency resource, where the first signal includes the area identification information, and the first signal further includes paging information.

Based on the foregoing solution, the area identification information and the paging information may be carried in a same signal.

With reference to the first aspect, in some implementations of the first aspect, that a terminal device receives area identification information from a network device through a first frequency resource includes: The terminal device receives a synchronization signal from the network device through the first frequency resource, where the synchronization signal includes the area identification information.

Based on the foregoing solution, the area identification information may be carried in the synchronization signal.

With reference to the first aspect, in some implementations of the first aspect, the area identification information is transmitted periodically.

With reference to the first aspect, in some implementations of the first aspect, the method further includes: The terminal device receives a synchronization signal from the network device through the first frequency resource, where the synchronization signal is transmitted periodically. That a terminal device receives area identification information from a network device through a first frequency resource includes: The terminal device receives the area identification information from the network device through the first frequency resource after preset duration that passes after receiving of the synchronization signal is completed, where the preset duration is greater than 0 or equal to 0.

With reference to the first aspect, in some implementations of the first aspect, a periodicity of the area identification information is the same as a periodicity of the synchronization signal.

Based on the foregoing solution, the common information may constantly appear after the synchronization signal. When the common information is close to the synchronization signal, decoding performance of the common information can be improved, and reliability of transmission of the common information can be improved.

With reference to the first aspect, in some implementations of the first aspect, a periodicity of the area identification information is an integer multiple of a periodicity of the synchronization signal.

With reference to the first aspect, in some implementations of the first aspect, the terminal device includes a first module and a second module. The terminal device receives the area identification information via the first module, and the terminal device performs the area update procedure or receives the system information via the second module.

With reference to the first aspect, in some implementations of the first aspect, a waveform of the first signal is different from a waveform of a second signal, and/or a modulation scheme of the first signal is different from a modulation scheme of the second signal. The first signal is a signal that carries the area identification information and/or the paging information, and the second signal is a signal transmitted by the terminal device through the second frequency resource.

With reference to the first aspect, in some implementations of the first aspect, the waveform and/or the modulation scheme of the first signal are/is on-off keying OOK, and/or the waveform and/or the modulation scheme of the second signal are/is orthogonal frequency division multiplexing OFDM. The first signal is a signal that carries the area identification information and/or the paging information, and the second signal is the signal transmitted by the terminal device through the second frequency resource.

With reference to the first aspect, in some implementations of the first aspect, the method further includes: The terminal device receives the paging information from the network device through the first frequency resource, where the paging information indicates information about one or more terminal devices that need to receive paging, and the one or more terminal devices include the terminal device; and the terminal device receives first information from the network device and/or initiates random access, where the first information includes one or more of the following information: paging downlink control information DCI, a paging message paging message, and a paging early indication PEI.

With reference to the first aspect, in some implementations of the first aspect, that the terminal device receives first information from the network device and/or initiates random access includes: The terminal device receives the first information from the network device and/or initiates random access through the second frequency resource.

For example, that the terminal device initiates random access includes: The terminal device sends a random access preamble sequence to the network device.

With reference to the first aspect, in some implementations of the first aspect, the terminal device includes the first module and the second module. The terminal device receives the area identification information and the paging information via the first module, and the terminal device receives the first information and/or initiates random access via the second module.

According to a second aspect, a signal transmission method is provided. The method may be performed by a network device, or may be performed by a component (for example, a chip or a circuit) of a network device. This is not limited. For ease of description, an example in which the method is performed by the network device is used below for description.

The method may include: The network device sends area identification information through a first frequency resource, where the first frequency resource is further used to transmit paging information, and the paging information includes information about one or more terminal devices that need to receive paging.

For example, the network device performs an area update procedure or sends system information through a second frequency resource. That the network device performs an area update procedure through a second frequency resource may indicate that after the terminal device initiates an area update procedure, the network device participates in the area update procedure through the second frequency resource.

Based on the foregoing solution, the network device can send the area identification information through the first frequency resource. A WUR and a main receiver are used as examples. The network device can send the area identification information via the WUR, to prolong working duration of the network device on a WUR link, and improve energy saving benefit.

With reference to the second aspect, in some implementations of the second aspect, the area identification information includes one or more of the following: a tracking area identifier, an access network area identifier, and a cell identifier.

With reference to the second aspect, in some implementations of the second aspect, that the network device sends area identification information through a first frequency resource includes: The network device sends a first signal through the first frequency resource, where the first signal includes the area identification information, and the first signal further includes the paging information.

With reference to the second aspect, in some implementations of the second aspect, that the network device sends area identification information through a first frequency resource includes: The network device sends a synchronization signal through the first frequency resource, where the synchronization signal includes the area identification information.

With reference to the second aspect, in some implementations of the second aspect, the area identification information is transmitted periodically.

With reference to the second aspect, in some implementations of the second aspect, the method further includes: The network device sends a synchronization signal through the first frequency resource, where the synchronization signal is transmitted periodically. That the network device sends area identification information through a first frequency resource includes: The network device sends the area identification information through the first frequency resource after preset duration that passes after sending of the synchronization signal is completed, where the preset duration is greater than 0 or equal to 0.

With reference to the second aspect, in some implementations of the second aspect, a periodicity of the area identification information is the same as a periodicity of the synchronization signal; or a periodicity of the area identification information is an integer multiple of a periodicity of the synchronization signal.

With reference to the second aspect, in some implementations of the second aspect, the network device includes a first module and a second module. The network device sends the area identification information via the first module.

With reference to the first aspect, in some implementations of the first aspect, a waveform of the first signal is different from a waveform of a second signal, and/or a modulation scheme of the first signal is different from a modulation scheme of the second signal. The first signal is a signal that carries the area identification information and/or the paging information, and the second signal is a signal transmitted by the network device through the second frequency resource.

With reference to the first aspect, in some implementations of the first aspect, the waveform and/or the modulation scheme of the first signal are/is on-off keying OOK, and/or the waveform and/or the modulation scheme of the second signal are/is orthogonal frequency division multiplexing OFDM. The first signal is a signal that carries the area identification information and/or the paging information, and the second signal is the signal transmitted by the network device through the second frequency resource.

With reference to the second aspect, in some implementations of the second aspect, the method further includes: The network device sends the paging information through the first frequency resource, where the paging information includes the information about the one or more terminal devices that need to receive the paging; and the network device sends first information to the one or more terminal devices and/or receives a random access preamble sequence from the one or more terminal devices, where the first information includes one or more of the following information: paging downlink control information DCI, a paging message paging message, and a paging early indication (PEI)

With reference to the second aspect, in some implementations of the second aspect, that the network device sends first information to the one or more terminal devices and/or receives a random access preamble sequence from the one or more terminal devices includes: The network device sends the first information to the one or more terminal devices and/or receives the random access preamble sequence from the one or more terminal devices through the second frequency resource.

With reference to the second aspect, in some implementations of the second aspect, the network device includes the first module and the second module. The network device sends the area identification information and the paging information via the first module, and the network device sends the first information to the one or more terminal devices and/or receives the random access preamble sequence from the one or more terminal devices via the second module.

For beneficial effects of the second aspect and possible designs, refer to the related description of the first aspect. Details are not described herein again.

According to a third aspect, a communication apparatus is provided. The apparatus is configured to perform the method according to any one of the possible implementations of the first aspect or the second aspect. Specifically, the apparatus may include units and/or modules, such as a processing unit and/or a communication unit, configured to perform the method according to any one of the possible implementations of the first aspect or the second aspect.

In an implementation, the apparatus is a communication device (for example, a terminal device or a network device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is a chip, a chip system, or a circuit used in a communication device, the communication unit may be an input/output interface, an interface circuit, an output circuit, an input circuit, a pin, a related circuit, or the like in the chip, the chip system, or the circuit, and the processing unit may be at least one processor, a processing circuit, a logic circuit, or the like.

According to a fourth aspect, a communication apparatus is provided. The apparatus includes at least one processor, configured to execute a computer program or instructions stored in a memory, to perform the method according to any one of the possible implementations of the first aspect or the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device or a network device).

In another implementation, the apparatus is a chip, a chip system, or a circuit used in a communication device (for example, a terminal device or a network device).

According to a fifth aspect, this application provides a processor, configured to perform the methods according to the foregoing aspects.

Operations such as sending and obtaining/receiving performed by the processor may be understood as operations such as outputting and receiving or inputting performed by the processor unless otherwise specified or if the operations does not conflict with an actual function or internal logic of the operations in a related description, or may be understood as sending and receiving operations performed by a radio frequency circuit and an antenna. This is not limited in this application.

According to a sixth aspect, a computer-readable storage medium is provided. The computer-readable medium stores program code executed by a device, and the program code is used to perform the method according to any one of the possible implementations of the first aspect or the second aspect.

According to a seventh aspect, a computer program product including instructions is provided. When the computer program product runs on a computer, the computer is enabled to perform the method according to any one of the possible implementations of the first aspect or the second aspect.

According to an eighth aspect, a communication system is provided, including the foregoing terminal device and the foregoing network device.

### BRIEF DESCRIPTION OF DRAWINGS

FIG. 1 is a schematic diagram of a wireless communication system 100 to which an embodiment of this application is applicable.
FIG. 2 is a schematic diagram in which a terminal device receives a wake-up signal via a wake-up circuit;
FIG. 3 is a schematic diagram of a waveform corresponding to a case in which a wake-up signal is modulated by OOK;
FIG. 4 is a schematic diagram of transmitting a synchronization signal;
FIG. 5 is another schematic diagram of transmitting a synchronization signal;
FIG. 6 is a schematic diagram of an SYNC raster;
FIG. 7(a) to FIG. 7(c) are schematic diagrams of an information transmission method 700 according to an embodiment of this application;
FIG. 8 is a schematic diagram of a first signal according to an embodiment of this application;
FIG. 9 is another schematic diagram of a first signal according to an embodiment of this application;
FIG. 10 is a schematic diagram of a synchronization signal according to an embodiment of this application;
FIG. 11 is another schematic diagram of a synchronization signal according to an embodiment of this application;
FIG. 12 is a schematic diagram of common information according to an embodiment of this application;
FIG. 13 is a schematic diagram of transmission of common information and a synchronization signal;
FIG. 14 is another schematic diagram of transmission of common information and a synchronization signal;
FIG. 15 is still another schematic diagram of a first signal according to an embodiment of this application;
FIG. 16 is a schematic diagram of an information transmission method 1600 according to an embodiment of this application;
FIG. 17 is a schematic block diagram of a communication apparatus according to an embodiment of this application;
FIG. 18 is a schematic block diagram of another communication apparatus according to an embodiment of this application; and
FIG. 19 is a schematic block diagram of still another communication apparatus according to an embodiment of this application.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

The terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some terminals, for example, include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a wearable device, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn by a user or integrated into clothes or an accessory of the user. The wearable device is not only a hardware device, but also implements a powerful function through software support, data exchange, and cloud interaction. Generic wearable intelligent devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In embodiments of this application, an apparatus configured to implement a function of the terminal device may be a terminal device, or may be an apparatus, for example, a chip system or a chip that can support the terminal device in implementing the function. The apparatus may be installed in the terminal device. In embodiments of this application, the chip system may include a chip, or may include a chip and another discrete component.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that enables the terminal device to access a wireless network. The base station may cover various names in the following in a broad sense, or may be replaced with the following names, for example, a NodeB (NodeB), an evolved base station (evolved NodeB, eNB), a next generation base station (next generation NodeB, gNB), a relay station, an access point, a transmitting and receiving point (transmitting and receiving point, TRP), a transmitting point (transmitting point, TP), a primary station, a secondary station, a multi-mode wireless (motor slide retainer, MSR) node, a home base station, a network controller, an access node, a wireless node, an access point (AP), a transmission node, a transmission/reception node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may also refer to a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a CU, a DU, a device including a CU and a DU, or a device including a control plane CU node (central unit-control plane (central unit-control plane, CU-CP)), a user plane CU node (central unit-user plane, (central unit-user plane, CU-UP)), and a DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

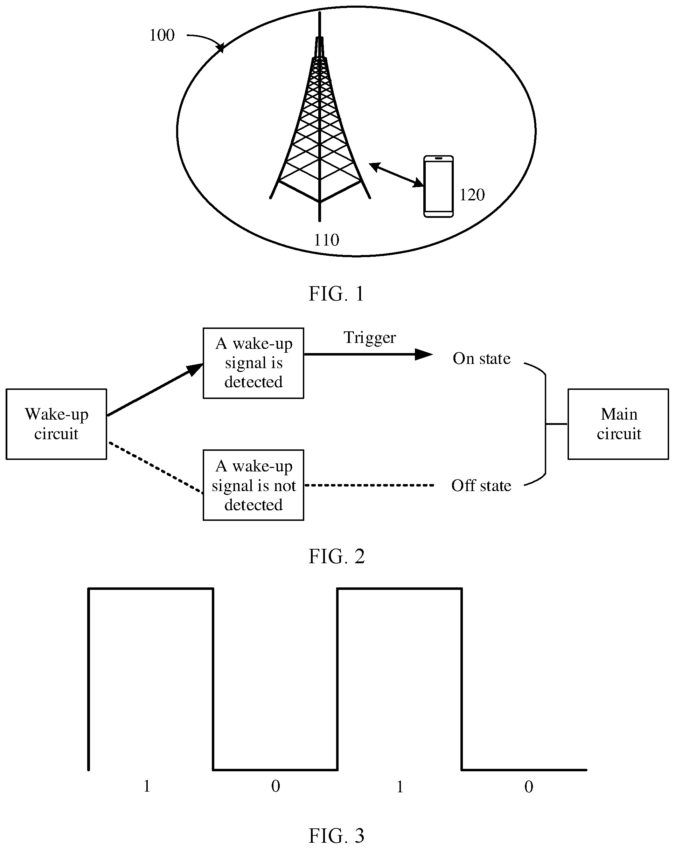

First, a network architecture applicable to this application is briefly described below with reference to FIG. 1.

For example, FIG. 1 is a schematic diagram of a wireless communication system 100 to which an embodiment of this application is applicable. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells, and one cell may have an integer quantity of terminal devices. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that, a cell may be understood as an area within coverage of a wireless signal of a network device.

It should be understood that FIG. 1 is merely a simplified schematic diagram of an example for ease of understanding. The wireless communication system 100 may further include another network device or another terminal device that is not shown in FIG. 1. Embodiments of this application are applicable to any communication scenario in which a transmit end device communicates with a receive end device.

To facilitate understanding of embodiments of this application, terms in this application are briefly described.

### 1. Paging (paging)

According to an existing standard, when a terminal device is in an idle (idle) state or an inactive (inactive) state, the terminal device may periodically receive paging. For example, a procedure in which the terminal device receives the paging includes the following steps.
(1) The terminal device may obtain a paging frame (paging frame, PF) and a location of a paging occasion (paging occasion, PO) in the PF through calculation based on an identifier (identifier, ID) (UE ID) of the terminal device.
(2) The terminal device monitors a physical downlink control channel (physical downlink control channel, PDCCH) (which may also be referred to as a paging PDCCH) on the PO, where the PDCCH includes downlink control information (downlink control information, DCI) (which may also be referred to as paging DCI).
(3) If the terminal device detects the PDCCH, the terminal device receives a physical downlink shared channel (physical downlink shared channel, PDSCH) (which may also be referred to as a paging PDSCH) at a location scheduled by the PDCCH. The paging PDSCH includes a paging message (paging message), and the paging message may indicate terminal devices that are paged. For example, the paging PDSCH includes a maximum of 32 paging records (paging records), and each paging record may include one UE ID, where the UE ID indicates UE that is paged. NR is used as an example. For example, the UE ID is a 5G system architecture evolution (system architecture evolution, SAE) temporary mobile subscriber identifier (5G SAE temporary mobile station identifier, 5G-S-TMIS), and has a length of 48 bits (bits).

It should be understood that the foregoing procedure for receiving the paging is merely an example for description. For example, for details, refer to a related standard. This is not limited in this application.

Generally, a same receiving module (or a receiver, or a receiving circuit) is used regardless of when the terminal device performs the paging receiving procedure in the idle state or the inactive state, or when the terminal device performs data receiving in a connected state. In this application, for ease of description, a module that implements these functions (or performs related steps) is referred to as a main circuit. It may be understood that the main circuit is merely a name for differentiation, and a specific name of the main circuit does not limit the protection scope of this application. For example, without loss of generality, the main circuit may also be described as a second circuit (or a second module). For consistency, the main circuit is described below.

A signal received by the terminal device via the main circuit may be referred to as being transmitted on a main link. The main link represents a connection relationship between the terminal device and a network device, and is a logical concept instead of a physical entity. It may be understood that the main link is merely a name for differentiation, and a specific name of the main link does not limit the protection scope of this application. For example, without loss of generality, the main link may also be described as a second link.

When the terminal device receives the paging via the main circuit, power consumption is high. For example, when receiving the paging, the terminal device first needs to receive a downlink signal via a receiving module of the main circuit, and then the terminal device needs to perform blind detection on a PDCCH, decode a received PDSCH, and the like. This brings high power consumption. In addition, due to complexity of the main circuit, reference power consumption (or static power consumption) of the main circuit during operation is high.

To reduce power consumption caused by receiving the paging by the terminal device, in a possible method, the terminal device may receive a wake-up signal (wake-up signal/radio, WUS/WUR) via a separate low-power small circuit. The wake-up signal is used to indicate paging-related information, and the paging-related information may include, for example, whether one terminal device or a group of terminal devices are paged. The low-power small circuit may be implemented via a separate simple-structure small circuit or chip, and the power consumption of the small circuit is low.

It should be understood that the low-power small circuit may be, for example, referred to as a wake-up receiver (wake-up receiver, WUR), may be referred to as a wake-up circuit, or may be referred to as a low-power circuit. A name of the small circuit is not limited in this application. In this application, for ease of description, the low-power small circuit is referred to as the wake-up circuit. It may be understood that the wake-up circuit is merely a name for differentiation, and a specific name of the wake-up circuit does not limit the protection scope of this application. For example, without loss of generality, the wake-up circuit may also be described as a first circuit (or a first module). For ease of description and consistency, the wake-up circuit is described below.

Similarly, a signal received by the terminal device via the wake-up circuit may be referred to as being transmitted on a wake-up link. The wake-up represents a connection relationship between the terminal device and the network device, and is a logical concept instead of a physical entity. It may be understood that the wake-up link is merely a name for differentiation, and a specific name of the wake-up link does not limit the protection scope of this application. For example, without loss of generality, the wake-up link may also be described as a first link. It should be further understood that the wake-up signal is merely an example of a name, and a name of the wake-up signal is not limited in this application.

For example, FIG. 2 is a schematic diagram in which a terminal device receives a wake-up signal via a wake-up circuit.

As shown in FIG. 2, the wake-up signal is detected via the wake-up circuit, and the wake-up signal may carry paging-related indication information.

When the terminal device receives the signal via the wake-up circuit, if the terminal device does not detect the wake-up signal associated with the terminal device, the terminal device continues to receive the signal via the wake-up circuit, and a main circuit may be in an off state (or a sleep state). If the terminal device detects the wake-up signal associated with the terminal device, the terminal device triggers wake-up of the main circuit, that is, enables the main circuit to be in/switched to an on state (or referred to as a working state, or referred to as an active state). After the main circuit is enabled, the terminal device may perform a paging receiving process. For example, the terminal device receives a paging PDCCH, and receives the paging PDSCH after detecting the paging PDCCH on a PO corresponding to the terminal device.

It should be understood that, in FIG. 2, an example in which the wake-up signal carries some paging-related information (for example, a partial UE ID of a paged terminal device, or a device group ID of a paged terminal device) is mainly used for description. This is not limited. For example, the wake-up signal may alternatively carry all paging-related information (for example, a complete UE ID of a paged terminal device). In this case, after the main circuit is enabled, random access and the like may be initiated. It can be understood that this is not limited. If the wake-up signal carries all the paging-related information, after the main circuit is enabled, the paging-related information may also be received.

For example, to ensure a power consumption gain, the wake-up signal may be modulated by on-off keying (on-off keying, OOK), and a corresponding wake-up circuit may receive the wake-up signal by using an envelope detection method. For example, FIG. 3 is a schematic diagram of a waveform corresponding to a case in which a wake-up signal is modulated by OOK.

When the wake-up signal is modulated by the OOK, each bit (namely, an encoded bit) may correspond to one symbol (symbol). Equivalently, a symbol may also be referred to as a chip (chip), or may be also referred to as another name. This is not limited herein.

For example, when the bit is 1, a signal is sent within a symbol length (that is, signal transmit power within the symbol length is not 0). When the bit is 0, no signal is sent within a symbol length (that is, signal transmit power within the symbol length is 0). As shown in FIG. 3, the waveform shown in FIG. 3 may represent four bits: 1010.

For another example, when the bit is 0, a signal is sent within a symbol length (that is, signal transmit power within the symbol length is not 0). When the bit is 1, no signal is sent within a symbol length (that is, signal transmit power within the symbol length is 0). In this case, the waveform shown in FIG. 3 may represent four bits: 0101.

### 2. First frequency resource and second frequency resource

The following uses a terminal device as an example to describe the first frequency resource and the second frequency resource with reference to several cases.

In a first possible case, the terminal device includes a first module and a second module. For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. In this application, the first module may be replaced with the wake-up circuit (or the first circuit), and the second module may be replaced with the main circuit (or the second circuit). For consistency, the first module and the second module are described below.

In this case, the first frequency resource may represent a frequency resource used by the terminal device to transmit a signal via the first module, and the second frequency resource may represent a frequency resource used by the terminal device to transmit a signal via the second module.

In a second possible case, the terminal device may work on a first link (or the terminal device may transmit a signal on a first link), or may work on a second link (or the terminal device may transmit a signal on a second link). In other words, the terminal device and a network device may communicate with each other on the first link or on the second link. For example, as described above, the first link may represent a link used when the terminal device transmits the signal via the wake-up circuit in FIG. 2, and the second link may represent a link used when the terminal device transmits the signal via the main circuit in FIG. 2.

In this case, the first frequency resource may represent a frequency resource used by the terminal device to transmit the signal on the first link, and the second frequency resource may represent a frequency resource used by the terminal device to transmit the signal on the second link.

In a third possible case, the terminal device may be in a first state (state) (for example, in a WUR state) and a second state. The first state and the second state are used to describe different states of the terminal device (such as different radio resource control (radio resource control, RRC) states). For example, power consumption of the terminal device in the first state may be less than power consumption of the terminal device in the second state. The first state may be, for example, an idle state or an inactive state, or may be a WUR state. The second state may be, for example, a connected (connected) state, or may be an idle state or an inactive state. The first state (for example, the WUR state) may correspond to that the terminal device works on a first link, or correspond to that the terminal device transmits a signal via a first module.

In this case, the first frequency resource may represent a frequency resource used by the terminal device to transmit a signal when the terminal device is in the first state, and the second frequency resource may represent a frequency resource used by the terminal device to transmit a signal when the terminal device is in the second state.

In a fourth possible case, the terminal device may be in a first mode (mode) (for example, a WUR mode) and a second mode. The first mode and the second mode are used for describing a case in which the terminal device transmits signals in different modes. For example, power consumption corresponding to a case in which the terminal device transmits a signal in the first mode may be less than power consumption corresponding to a case in which the terminal device transmits a signal in the second mode. The first mode (for example, the WUR mode) may correspond to that the terminal device works on a first link, or correspond to that the terminal device transmits the signal via a first module.

In this case, the first frequency resource may represent a frequency resource used by the terminal device to transmit the signal when the terminal device is in the first mode, and the second frequency resource may represent a frequency resource used by the terminal device to transmit the signal when the terminal device is in the second mode.

It can be learned from the foregoing description that transmitting a signal through the first frequency resource may be replaced with any one of the following: transmitting a signal via a first module, transmitting a signal on a first link, transmitting a signal when being in a first state, or transmitting a signal when being in a first mode; and transmitting a signal through the second frequency resource may be replaced with any one of the following: transmitting a signal via a second module, transmitting a signal on a second link, transmitting a signal when being in a second state, or transmitting a signal when being a second mode. For consistency, the following mainly uses the first frequency resource and the second frequency resource as examples for description.

The foregoing mainly describes the first frequency resource and the second frequency resource from a perspective of a device, and the following describes the first frequency resource and the second frequency resource from a perspective of a signal. It is assumed that a signal transmitted through the first frequency resource is a first signal, and a signal transmitted through the second frequency resource is a second signal.

### (1) Modulation schemes of the first signal and the second signal are different.

For example, the modulation scheme of the first signal is OOK, and the modulation scheme of the second signal is orthogonal frequency division multiplexing (orthogonal frequency division multiplexing, OFDM) modulation or discrete Fourier transform-spread-orthogonal frequency division multiplexing (discrete Fourier transform-spread-orthogonal frequency division multiplexing, DFT-s-OFDM) modulation.

### (2) Modulation schemes of the first signal and the second signal are different.

For example, the waveform of the first signal is OOK, and the waveform of the second signal is an OFDM waveform or a DFT-s-OFDM waveform.

### (3) The first signal and the second signal are different.

For example, the first signal includes one or more of the following: a synchronization signal, common information, and paging information. The paging information includes information about one or more terminal devices that need to receive paging. Information included in the first signal may be predefined in a standard, or may be configured by a network side. This is not limited. The "configured by a network side" means that the network side performs configuration through a second link. For example, after obtaining the configuration information of a first link on the second link, a terminal device switches to work on the first link.

For another example, the second signal may be a signal different from the first signal. The second signal may, for example, represent various downlink signals or channels in an NR signal (namely, an existing NR signal). For example, the second signal includes any one or more of the following: a synchronization signal block (synchronization signal block, SSB), a PDCCH, a PDSCH, a channel state information reference signal (channel state information reference signal, CSI-RS), a phase tracking reference signal (phase tracking reference signal, PTRS), a positioning reference signal (positioning reference signal, PRS), and a demodulation reference signal (Demodulation reference signal, DMRS). The second signal may alternatively represent various uplink signals or channels in the NR signal. For example, the second signal includes any one or more of the following: a DMRS, a physical uplink control channel (physical uplink control channel, PUCCH), a physical uplink shared channel (physical uplink shared channel, PUSCH), and a sounding reference signal (sounding reference signal, SRS).

For another example, the second signal may carry one or more of the following information: a paging early indication (paging early indication, PEI), paging DCI (paging DCI), and a paging message (namely, a paging PDCCH and a paging PDSCH). The PEI may indicate whether paging is sent on a PO associated with the PEI.

For another example, the second signal may represent a signal in a random access process of the terminal device. For example, the second signal includes a random access preamble sequence (preamble).

It may be understood that the foregoing mainly uses the terminal device as an example to describe the first frequency resource and the second frequency resource. It may be understood that the foregoing description is also applicable to another communication device (for example, a network device). For brevity, details are not described herein again.

### 3. Synchronization signal (synchronization signal, SYNC)

When a terminal device receives a wake-up signal on a wake-up link, to correctly receive the wake-up signal, the terminal device may further receive a synchronization signal, so that the terminal device can perform time synchronization based on the synchronization signal. For example, the terminal device may receive the synchronization signal on the wake-up link.

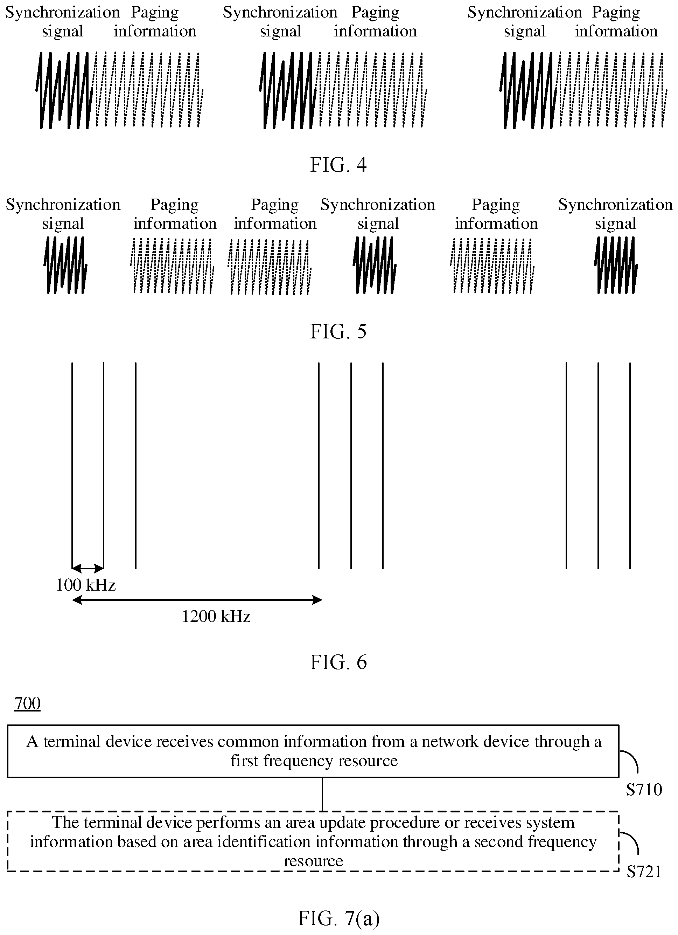

For example, FIG. 4 is a schematic diagram of transmitting a synchronization signal.

As shown in FIG. 4, the synchronization signal is transmitted along with paging information, that is, the synchronization signal and paging information are transmitted together. For example, whenever a network device sends a wake-up signal that carries paging information, the wake-up signal includes a synchronization signal, and the synchronization signal is located at a beginning of the wake-up signal (for example, a start location, or a location before the paging information), and is followed by the paging information.

For example, FIG. 5 is another schematic diagram of transmitting a synchronization signal.

As shown in FIG. 5, the synchronization signal does not need to be transmitted along with paging information, and the synchronization signal and a wake-up signal that carries paging information may be transmitted independently. For example, a network device may periodically send a synchronization signal, and the synchronization signal may not be followed by paging information.

It may be understood that the foregoing two manners of transmitting the synchronization signal are examples for description, and a manner of transmitting the synchronization signal is not limited in this application.

### 4. Area identification information

According to an existing standard, when a terminal device is in an idle state or an inactive state, the terminal device may receive a paging message. However, the UE in the idle state or the inactive state does not establish a connection to a network side, and the network side cannot accurately know a location of the UE. For example, when the UE moves from one cell (for example, denoted as a cell #1) to another cell (for example, denoted as a cell #2), if the network side sends a paging message in the cell #1, the UE may not be paged. To enable the network side to page the UE, the network side may send paging for the UE by using each base station in an area. The UE also needs to know the location of the UE, to receive some signals, or notify the network side of a location change in a manner.

In embodiments of this application, the area identification information indicates information that can identify an area. In other words, a receive end may learn the information about the area based on the area identification information. For example, the area identification information may include one or more of the following: identifier information of a tracking area (tracking area, TA), identifier information of a RAN area (RAN area), and identifier information of a cell.
(1) Tracking area: When the UE is in the idle state, the paging received by the UE is core network (core network, CN) paging (CN paging), and the network side may send the paging for the UE by using each base station in the TA in which the UE is located. The base station may broadcast, in system information, a TA in which a current base station is located. For example, the base station may indicate, by using tracking area code (TrackingAreaCode) in the system information, the TA in which the current base station is located, and a length of TrackingAreaCode is, for example, 24 bits.
   For example, when moving from one cell (for example, denoted as a cell #1) to another cell (for example, denoted as a cell #2), the UE in the idle state may receive system information from the cell #2. The UE reads TrackingAreaCode in the system information to determine whether the UE is still in a previous TA. If the UE determines that the UE has entered a new TA, the UE may initiate a tracking area update (tracking area update) process. By initiating the tracking area update process, the UE may notify a core network of the new TA in which the UE is located. The tracking area update process may also be referred to as a mobility registration update (mobility registration update) process.
(2) RAN area: When the UE is in the inactive state, the paging received by the UE is an access network paging (RAN paging), and the network side may send the paging for the UE by using each base station in the RAN area in which the UE is located. The base station may broadcast, in system information, a RAN area in which a current base station is located. For example, the base station may indicate by using RAN area code (RAN-AreaCode) in the system information, and a length of the RAN-AreaCode is, for example, 8 bits.
   For example, when moving from one cell (for example, denoted as a cell #1) to another cell (for example, denoted as a cell #2), the UE in the inactive state may receive system information from the cell #2. The UE reads RAN-AreaCode in the system information to determine whether the UE is still in a previous RAN area. If the UE determines that the UE has entered a new RAN area, the UE may initiate a RAN area (RAN-based notification area update, RNAU) update process. By initiating the RAN area update process, the UE may notify the network side of the new RAN area in which the UE is located.
(3) Cell identifier: A base station may broadcast an identifier of a cell by using system information, for example, a cell identifier (CellIdentity) is used for indication, where a length of CellIdentity is, for example, 36 bits. For example, when moving from a cell #1 to a cell #2, the UE may receive system information from the cell #2. The UE may read CellIdentity in the system information to determine that the UE has entered the new cell #2.

### 5. Warning-related information

The warning-related information, may, for example, indicate information related to warning information.

In embodiments of this application, for example, the warning-related information may be warning information, or the warning-related information may be warning information reception indication information. The following separately provides descriptions.

### (1) Warning information

The warning information, or referred to as alarm information, or referred to as emergency information, may include but is not limited to, for example, earthquake and tsunami warning system (earthquake and tsunami warning system, ETWS) information and commercial mobile alert system (commercial mobile alert system, CMAS) information.

The warning information may include first warning information and second warning information. The first warning information and the second warning information have different priorities. For example, the first warning information has a higher priority, and the second warning information has a lower priority. The following uses an ETWS as an example for description.

The ETWS may be divided into two parts: primary notification (primary notification) information (namely, an example of the first warning information) and secondary notification (secondary notification) information (namely, an example of the second warning information). Compared with the secondary notification information, the primary notification information has a higher priority, and the secondary notification information has a lower priority.

The primary notification information generally indicates information that is urgent and has a small data amount, for example, information about emergencies such as earthquakes and tsunamis. The primary notification information may indicate, for example, one or more of the following: an information type (such as an earthquake or a tsunami), and how a terminal prompts a user. Based on requirements of TS22.168 and TS22.268, the primary notification information needs to be received by an operator and sent to UE within 4s. A data amount is approximately several bytes (bytes).

The secondary notification information generally indicates information that is not urgent and has a large data amount. The secondary notification information may indicate, for example, one or more of the following: a purpose for sending the information (for example, for testing, and training), a safe location, how to obtain help, food distribution time, and the like.

The warning information is not described below.

### (2) Warning information reception indication information

The warning information reception indication information, or referred to as warning information reception notification information, may indicate (or referred to as notify) whether to receive (or whether to read) warning information. In the following, for brevity, the warning information reception indication information is denoted as information #1.

Generally, the warning information is carried in system information. It is considered that the UE does not frequently read the system information, so that the UE may be indicated (or referred to as notified) in a manner whether to read the warning information. In a possible manner, a network device may send the information #1, where the information #1 indicates whether the UE reads the system information corresponding to the warning information. For example, the network device sends paging DCI, where the paging DCI includes the information #1, and the information #1 indicates whether the UE reads system information corresponding to an ETWS/a CMAS.

An implementation of the information #1 is not limited in this application.

In a possible implementation, the information #1 is implemented by using one or more bits. For example, it is assumed that one bit is used to indicate whether a receive end receives warning information. If the bit is set to "1", it indicates that the receive end needs to receive the warning information. If the bit is set to "0", it indicates that the receive end does not need to receive the warning information. It should be understood that the foregoing description is merely an example, and is not limited. For example, the information #1 may alternatively be used to trigger the receive end to receive the warning information. For example, if a terminal device receives the information #1, the terminal device receives the warning information in response to the information #1.

It should be noted that, in embodiments of this application, an example in which the information #1 indicates to receive the warning information is mainly used for description. It may be understood that the information #1 may alternatively indicate not to receive the warning information.

### 6. System information change indication information

The system information change indication information, or referred to as system information change notification information, may indicate (or referred to as notify) whether to receive (or whether to read) system information, or may indicate (or referred to as notify) whether system information is changed. In the following, for brevity, the system information change indication information is denoted as information #2.

Generally, system information of a cell is not updated frequently. Once UE reads the system information of the cell, the UE basically does not read the system information frequently. If the system information of the cell is updated, the UE needs to read updated system information. Otherwise, an error may occur. For example, it is assumed that a paging-related configuration of the cell is updated. If the UE does not read the updated system information, the UE cannot correctly receive paging. For another example, it is assumed that a random access-related configuration of the cell is updated. If the UE does not read the updated system information, the UE cannot successfully initiate random access.

To ensure that the UE can read the updated system information in time after the system information is updated, the UE may be indicated (or referred to as notified) in a manner whether to re-read the system information. In a possible manner, a network device may send the information #2, where the information #2 indicates whether the UE re-reads the system information. For example, the network device sends paging DCI, where the paging DCI includes the information #2, and the information #2 indicates whether the UE re-reads the system information.

An implementation of the information #2 is not limited in this application.

In a possible implementation, the information #2 is implemented by using one or more bits. For example, it is assumed that one bit is used to indicate whether the system information is changed. If the bit is set to " 1", it indicates that the system information is changed, and the terminal device needs to read the system information. If the bit is set to "0", it indicates that the system information is not changed, and the terminal device does not need to read the system information. It should be understood that the foregoing description is merely an example, and is not limited.

It should be noted that, in embodiments of this application, an example in which the information #2 indicates that the system information is changed is mainly used for description. It may be understood that the information #2 may alternatively indicate not to receive the system information or indicate that the system information is not changed.

### 7. Absolute radio frequency channel number (absolute radio frequency channel number, ARFCN)

The ARFCN may be used to map a frequency location to an index (index), to facilitate indication of a frequency domain location.

In an LTE system, the ARFCN may also be referred to as an EARFCN. In the LTE system, a frequency spacing between neighboring ARFCNs may be, for example, 100 kHz.

In an NR system, the ARFCN may also be referred to as an NR ARFCN. For NR, the frequency location may satisfy the following formula: F_{REF} = F_{REF-Offs} + ΔF_{Global} (N_{REF} - N_{REF-Offs}). F_{REF} indicates the frequency location, ΔF_{Global} indicates the frequency spacing between the neighboring ARFCNs, N_{REF} indicates an ARFCN index corresponding to the frequency location, F_{REF-Offs} may indicate a frequency offset value, and N_{REF-Offs} may indicate an index offset value. It may be understood that specific definitions of F_{REF-Offs} and N_{REF-Offs} are not limited in this application, and both are used to calculate F_{REF}. For example, Table 1 shows possible values of the parameters. It can be learned from Table 1 that the frequency spacing of the ARFCN may be 5 kHz or 15 kHz. It may be understood that the foregoing formula for calculating F_{REF} is merely an example for description. This is not limited in this application. Any manner (for example, a variant formula that belongs to the foregoing formula) in which F_{REF} can be calculated is applicable to this application.

**Table 1**

| Frequency range (frequency range) (MHz) | ΔF_{Global} (kHz) | F_{REF-Offs} (MHz) | N_{REF-Offs} | Range of N_{REF} (range of N_{REF}) |
|---|---|---|---|---|
| 0 to 3000 | 5 | 0 | 0 | 0 to 599999 |
| 3000 to 24250 | 15 | 3000 | 600000 | 600000 to 2016666 |

### 8. Channel raster (channel raster)

The channel raster indicates a location of a carrier center (namely, a direct current subcarrier), and can be used to limit a location of a carrier deployment. The channel raster may be indicated by an ARFCN.

For example, a spacing of channel rasters in LTE may constantly be 100 kHz. In addition, in LTE, the channel raster may be used by a base station to search for a network, that is, UE may attempt to search for an LTE cell at a step of 100 kHz. For example, most of spacings of channel rasters in NR are 100 kHz, and some frequency bands are 15 kHz or 30 kHz.

### 9. Synchronization raster (synchronization raster, SYNC raster)

The SYNC raster may be used to determine a location of a center (namely, a direct current subcarrier) of a synchronization signal block (synchronization signal block, SSB), and may be further used to accelerate network search. For example, in some systems, for example, in an NR system, a cell bandwidth is large, and the SYNC raster is introduced to accelerate network search. In some systems, for example, in the NR system, a channel raster is not used to search for a network, but is used to define a location of a carrier center.

For example, FIG. 6 is a schematic diagram of an SYNC raster. As shown in FIG. 6, there are three SYNC rasters every 1200 kHz, and a spacing between two adjacent SYNC rasters is 100 kHz.

It may be understood that the foregoing content related to the frequency location is mainly described in a unit of Hz. This is not limited. Any unit that can indicate the frequency location is applicable to this application. For example, a resource block (resource block, RB) indicates a frequency resource block within a cell. An RB is a relative frequency location calculated based on a reference point of a cell. One RB may include 12 resource elements (resource elements, REs), and each RE corresponds to one subcarrier.

The foregoing briefly describes terms used in this application. Details are not described in the following embodiments again.

It may be understood that the term "and/or" in this specification describes only an association relationship for describing associated objects, and indicates that three relationships may exist. For example, A and/or B may indicate that only A exists, both A and B exist, and only B exists. In addition, the character "/" in this specification generally indicates an "or" relationship between associated objects.

The following describes in detail an information transmission method provided in embodiments of this application with reference to the accompanying drawings. Embodiments provided in this application may be applied to the network architecture shown in FIG. 1. This is not limited.

FIG. 7(a) to FIG. 7(c) are schematic diagrams of an information transmission method 700 according to an embodiment of this application. The method 700 may include the following steps.

S710: A terminal device receives common information from a network device through a first frequency resource.

Correspondingly, the network device sends the common information through the first frequency resource.

The terminal device is used as an example. That a terminal device receives common information from a network device through a first frequency resource may be replaced with any one of the following: A terminal device receives common information from a network device via a first module, a terminal device receives common information from a network device on a first link, a terminal device receives common information from a network device when the terminal device is in a first state, and a terminal device receives common information from a network device when the terminal device is in a first mode.

The common information may be understood as information that is not specifically sent to a terminal device or a terminal device group in a cell, and may be, for example, similar to system information block (system information block, SIB) information in a legacy cell.

Optionally, the common information includes one or more of the following: warning information, information #1 (namely, warning information reception indication information), area identification information, or information #2 (namely, system information change indication information). For a specific description of each piece of information, refer to the foregoing term description. Details are not described herein again.

After receiving the common information, the terminal device may perform different operations based on different common information. The following provides examples for description with reference to the different common information.

Example 1: The common information is the area identification information.

In this example, as shown in FIG. 7(a), the method 700 further includes S721: The terminal device performs an area update procedure or receives system information based on the area identification information through a second frequency resource.

That the terminal device performs an area update procedure or receives system information through a second frequency resource may be replaced with any one of the following: The terminal device performs an area update procedure or receives system information via a second module, the terminal device performs an area update procedure or receives system information on a second link, the terminal device performs an area update procedure or receives system information when the terminal device is in a second state, and the terminal device performs an area update procedure or receives system information when the terminal device is in a second mode. For performing of the area update procedure, for example, refer to the conventional update procedure. This is not limited.

As described above, the area identification information indicates information that can identify an area, that is, the terminal device may learn information about the area based on the area identification information. For example, the area identification information may include one or more of the following: a tracking area identifier, a RAN area identifier, and a cell identifier.

The following describes several cases with reference to different content included in the area identification information.

In a first possible case, the area identification information includes the tracking area identifier.

The tracking area identifier may be, for example, the foregoing TrackingAreaCode (namely, information that is the same as that defined in an existing standard and of a same length), or may be shorter identifier information configured over a network (namely, other forms of information that has a similar function and that can be configured over the network). This is not limited.

In this case, optionally, that the terminal device performs an area update procedure or receives system information based on the area identification information through a second frequency resource in S721 includes: When the terminal device determines, based on the tracking area identifier, that a tracking area of the terminal device is updated, the terminal device performs a tracking area update procedure through the second frequency resource.

The tracking area of the terminal device represents the tracking area in which the terminal device is located, or represents a tracking area in which a network device providing a service for the terminal device is located.

For example, if the terminal device determines, based on the tracking area identifier, that the tracking area of the terminal device is updated, the terminal device may enable a main circuit, and perform the tracking area update procedure via the main circuit. Therefore, the terminal device receives the tracking area identifier via a wake-up circuit. If the terminal device finds that the terminal device has entered a new tracking area, the terminal device may enable the main circuit to perform a tracking area update process, so as to notify a network side of the new tracking area in which the terminal device is located. This prevents the network side from being incapable of paging the terminal device.

In a second possible case, the area identification information includes the RAN area identifier.

The RAN area identifier may be, for example, the foregoing RAN-AreaCode (namely, information that is the same as that defined in an existing standard and of a same length), or may be shorter identifier information configured over a network (namely, other forms of information that has a similar function and that can be configured over the network). This is not limited.

In this case, optionally, that the terminal device performs an area update procedure or receives system information based on the area identification information through a second frequency resource in S721 includes: When the terminal device determines, based on the RAN area identifier, that a RAN area identifier of the terminal device is updated, the terminal device performs a RAN area identifier update procedure through the second frequency resource.

The RAN area of the terminal device represents the RAN area in which the terminal device is located, or represents a RAN area in which a network device providing a service for the terminal device is located.

For example, if the terminal device determines, based on the RAN area identifier, that the RAN area of the terminal device is updated, the terminal device may enable a main circuit, and perform the RAN area update procedure via the main circuit. Therefore, the terminal device receives the RAN area identifier via a wake-up circuit. If the terminal device finds that the terminal device has entered a new RAN area, the terminal device may enable the main circuit to perform a RAN area update process, so as to notify a network side of the new RAN area in which the terminal device is located. This prevents the network side from being incapable of paging the terminal device.

In a third possible case, the area identification information includes the cell identifier.

The cell identifier may be, for example, CellIdentity (namely, information that is the same as that defined in an existing standard and of a same length), or may be shorter identifier information configured over a network (namely, other forms of information that has a similar function and that can be configured over the network). This is not limited.

In this case, optionally, that the terminal device performs an area update procedure or receives system information based on the area identification information through a second frequency resource in S721 includes: When the terminal device determines, based on the cell identifier, that a cell of the terminal device is updated, the terminal device receives, through the second frequency resource, system information of a cell (namely, a cell in which the terminal device is currently located) indicated by the cell identifier.

The cell of the terminal device represents the cell in which the terminal device is located, or represents a cell that serves the terminal device.

For example, if the terminal device determines, based on the cell identifier, that the cell of the terminal device is updated, the terminal device may enable a main circuit, and receive the system information of the updated cell via the main circuit. Therefore, the terminal device receives the cell identifier via a wake-up circuit. If the terminal device finds that the terminal device has entered a new cell, the terminal device may enable the main circuit to receive the system information of the new cell, so that the terminal device can receive correct system information in time, to reduce an access delay after the terminal device is paged. For example, if the terminal device does not obtain the system information in time, after receiving paging via the wake-up circuit, the terminal device needs to first receive the system information of the new cell, and can receive information (this information is denoted as first information for differentiation) from the main circuit only after learning a paging configuration of the current cell, or can initiate random access only after learning a random access configuration of the current cell. The first information represents paging-related information, and the first information may include, for example, one or more of the following: paging DCI (this may facilitate receiving a paging message by the terminal device at a location scheduled by the paging DCI), a paging message (for example, a paging PDCCH and a paging PDSCH), and a PEI (for example, the PEI may indicate whether paging is sent on a PO associated with the PEI). If the terminal device can obtain the system information in advance, after receiving the paging via the wake-up circuit, the terminal device can directly receive the first information or directly initiate random access, to reduce a delay.

Example 2: The common information is the information #2, where the information #2 indicates that system information (denoted as target system information for differentiation) is changed.

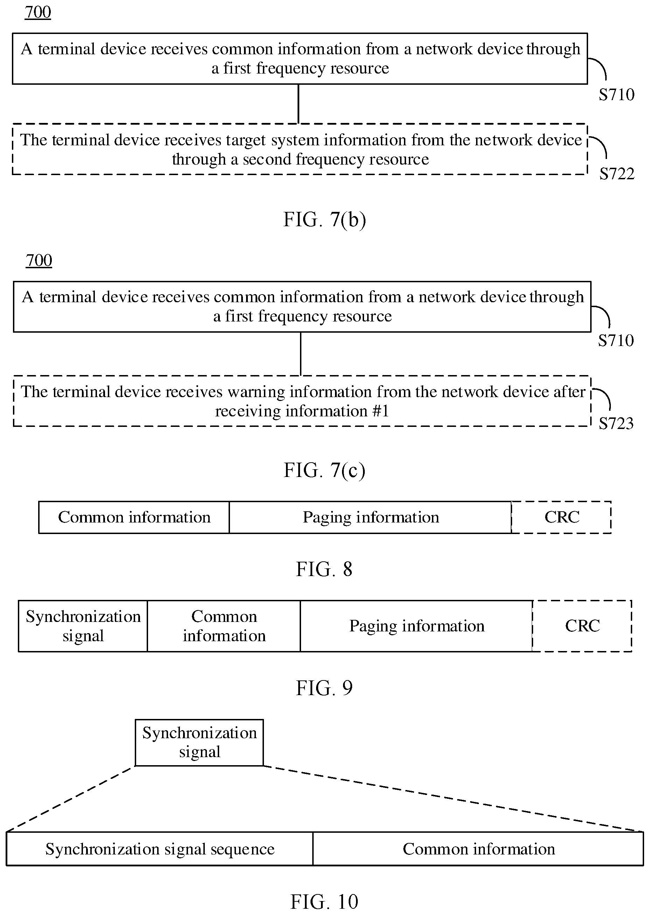

In this example, as shown in FIG. 7(b), the method 700 further includes S722: The terminal device receives the target system information from the network device through a second frequency.

That the terminal device receives the target system information from the network device through a second frequency resource may be replaced with any one of the following: The terminal device receives the target system information from the network device via a second module, the terminal device receives the target system information from the network device on a second link, the terminal device receives the target system information from the network device when the terminal device is in a second state, and the terminal device receives the target system information from the network device when the terminal device is in a second mode.

For example, if the terminal device receives the information #2, and the information #2 indicates that the system information is changed, the terminal device may enable a main circuit, and receive the target system information via the main circuit. Therefore, the terminal device receives the information #2 via a wake-up circuit. If the terminal device finds that the system information is changed, the terminal device may enable the main circuit to receive updated system information (namely, the target system information), so that the terminal device can receive correct system information in time, to reduce an access delay after the UE is paged.

With regard to the target system information, the following describes several possible manners.

In a first possible manner, the target system information is a master system information block (master information block, MIB) or any SIB. For example, when the MIB or any SIB sent on the second link is changed, the network device sends the information #2 on the first link, so that the terminal device enables the main circuit to receive the updated system information.

In a second possible manner, the target system information is a SIB 1. It is considered that a change of the SIB 1 may affect working of the second link, for example, if a paging configuration or a random access configuration is changed, an access delay of the terminal device may be affected. A change of other system information may not affect the working of the second link, for example, if information related to neighboring cell measurement is changed, working of the UE on a WUR link is not affected. Therefore, the main circuit may be enabled to receive the updated system information when the SIB 1 is changed.

In a third possible manner, the target system information is a MIB or a SIB 1. In addition to the SIB 1, a change of the MIB also affects working of the second link. For example, the MIB includes a parameter of a control resource set (control resource set, CORESET) 0, and the parameter affects receiving of downlink control information by the terminal device. Therefore, when the MIB or the SIB 1 sent on the second link is changed, the network device sends the information #2 on the first link, so that the terminal device enables the main circuit to receive an updated MIB or SIB 1.

In a fourth possible manner, the target system information includes some specific information (for example, some information of a SIB 1). For example, the target system information includes one or more of the following: common configuration information of a serving cell, configuration information of a timer or a counter of the terminal device, configuration information of unified access control (unified access control, UAC), and configuration information of the first link. After the information is changed, an access delay of the terminal device on the second link may be affected, or working of the terminal device on the first link may be affected. Therefore, after the information is updated, the terminal device needs to be notified in time to receive the updated system information.

The common configuration information of the serving cell may include, for example, but is not limited to: downlink (downlink, DL) configuration information, uplink (uplink, UL) configuration information, and time division duplexing (time division duplexing, TDD) frame structure configuration information.

The configuration information of the timer or the counter of the terminal device includes, for example, duration of a timer T300 used to control success or failure of a connection establishment process.

The configuration information of the first link includes, for example, a frequency domain location of the first link, a signal format of the first link, or configuration information of a synchronization signal on the first link.

It may be understood that the foregoing description is an example, and this application is not limited thereto. For example, when the system information or the system information block is changed, the terminal device may receive the updated system information or the system information through the second frequency. Alternatively, when some specific system information or some specific system information blocks are changed, the terminal device may receive the updated system information or the updated system information block through the second frequency. Alternatively, when some specific system information in a system information block (or some specific system information blocks) is changed, the terminal device may receive the updated system information through the second frequency.

Example 3: The common information is the information #1, where the information #1 may indicate to receive the warning information.

In this example, as shown in FIG. 7(c), the method 700 further includes S723: The terminal device receives the warning information from the network device after receiving the information #1.

The first link is used as an example. When the terminal device uses discontinuous reception on the first link, the terminal device may receive a signal only in part of time. For example, during duration of 10s, the terminal device receives the signal only in a time window of 50 ms corresponding to the terminal device. Locations of time windows corresponding to different terminal devices may be different. In this case, to ensure that each terminal device can receive the warning information, the network device may need to frequently send the warning information. For example, the warning information is sent once in each time window. As a result, signal congestion occurs on the first link, that is, all resources are occupied by the warning information, and no extra resource is available to send paging information. To resolve this problem, the warning information may be sent only at some time locations, and the information #1 is sent in a more frequent manner. When the terminal device receives the information #1, the terminal device may start to continuously receive the warning information on the first link. Therefore, the information #1 is transmitted on the first link, to not only reduce a delay of receiving the warning information by the terminal device, but also resolve a signal congestion caused by the occupation of the first link by the warning information.

For example, that the terminal device receives the warning information from the network device after receiving the information #1 includes: The terminal device receives the warning information from the network device in a preset time period after receiving the information #1. The preset time period may be, for example, configured by the network device, or may be predefined. This is not limited. The preset time period may alternatively be implemented by using a timer. For example, after receiving the information #1, the terminal device starts the timer, and the terminal device receives the warning information from the network device within preset duration. For another example, in a period of time after receiving the information #1, the terminal device starts the timer, and the terminal device receives the warning information from the network device within preset duration.

For another example, that the terminal device receives the warning information from the network device after receiving the information #1 includes: The terminal device continuously receives the warning information from the network device after receiving the information #1. In other words, after receiving the information #1, the terminal device may continuously attempt to receive the warning information from the network device until the warning information is received.

The following describes several possible cases in which the terminal device receives the warning information from the network device after receiving the information #1.

In a possible case, that the terminal device receives the warning information from the network device after receiving the information #1 may include: The terminal device receives the warning information from the network device through the first frequency resource after receiving the information #1. For example, if the terminal device receives the information #1 via a wake-up circuit, and the information #1 indicates to receive the warning information, the terminal device may receive the warning information via the wake-up circuit. Therefore, the delay of receiving the warning information by the terminal device can be reduced.

In another possible case, that the terminal device receives the warning information from the network device after receiving the information #1 may include: The terminal device receives the warning information from the network device through the second frequency resource after receiving the information #1. For example, if the terminal device receives the information #1 via a wake-up circuit, and the information #1 indicates to receive the warning information, the terminal device may enable a main circuit to receive the warning information.

In still another possible case, that the terminal device receives the warning information from the network device after receiving the information #1 may include: The terminal device receives first warning information from the network device through the first frequency resource after receiving the information #1, and/or receives second warning information from the network device through the second frequency resource. As described above, the warning information may include the first warning information and the second warning information. The first warning information and the second warning information have different priorities. It is assumed that the first warning information has a higher priority, and the second warning information has a lower priority. For example, the terminal device receives the information #1 via a wake-up circuit. If the information #1 indicates to receive the first warning information, the terminal device may receive the first warning information via the wake-up circuit. If the information #1 indicates to receive the second warning information, the terminal device may enable the main circuit to receive the second warning information.

In any one of the foregoing cases, that the terminal device receives the warning information from the network device through the first frequency resource is used as an example. That the terminal device receives the warning information from the network device through the first frequency resource may be replaced with any one of the following: The terminal device receives the warning information from the network device via the first module, the terminal device receives the warning information from the network device on the first link, the terminal device receives the warning information from the network device when the terminal device is in the first state, and the terminal device receives the warning information from the network device when the terminal device is in the first mode.

Example 4: The common information is the warning information.

In a possible case, the warning information includes first warning information and second warning information. In this case, the terminal device may directly apply the warning information after receiving the warning information. For example, the terminal device may prompt a user, for example, by using a pop-up window, a vibration, or an SMS message, or in another manner.

In another possible case, the warning information includes first warning information. In this case, the method 700 may further include: The terminal device receives second warning information from the network device through a second frequency resource. That the terminal device receives second warning information from the network device through a second frequency resource may be replaced with any one of the following: The terminal device receives second warning information from the network device via a second module, the terminal device receives second warning information from the network device on a second link, the terminal device receives second warning information from the network device when the terminal device is in a second state, and the terminal device receives second warning information from the network device when the terminal device is in a second mode. The first link and the second link are used as examples. It may take some time (for example, 1s to 2s) for the terminal device to switch from the first link to the second link. The first warning information has a high requirement on a delay (for example, a primary notification is completed within 4s). Therefore, sending the first warning information on the first link helps reduce a warning delay.

It may be understood that the foregoing uses the first warning information and the second warning information as examples for description. This application is not limited thereto. For example, the warning information may further include at least two types of warning information with different priorities.

The foregoing separately describes the different operations performed by the terminal device after receiving the common information with reference to the different common information. The following describes several possible solutions for transmitting the common information by using the common information as an example without loss of generality.

Solution 1: The common information and the paging information are carried in a same signal.

For example, in S710, that a terminal device receives common information from a network device through a first frequency resource includes: The terminal device receives a first signal from the network device through the first frequency resource, where the first signal includes the common information and the paging information.

Locations of the common information and the paging information in the first signal are not limited. For example, in the first signal, the common information is located before the paging information.

For example, FIG. 8 is a schematic diagram of a first signal according to an embodiment of this application. As shown in FIG. 8, the first signal includes common information and paging information. The common information may be located at a start location of the first signal, and the paging information is located at a location after the common information. Optionally, the first signal further includes cyclic redundancy check (cyclic redundancy check, CRC), and the CRC may be located at an end location.

Optionally, the first signal further includes a synchronization signal. For example, the synchronization signal may be located at the start location of the first signal.

For example, FIG. 9 is another schematic diagram of a first signal according to an embodiment of this application. As shown in FIG. 9, the first signal includes common information, paging information, and a synchronization signal, and the synchronization signal is located at a start location of the first signal. Optionally, the first signal further includes CRC, and the CRC may be located at an end location.

Solution 2: The common information is carried in a synchronization signal.

In S710, that a terminal device receives common information from a network device through a first frequency resource includes: The terminal device receives the synchronization signal from the network device through the first frequency resource, where the synchronization signal includes the common information.

For example, FIG. 10 is a schematic diagram of a synchronization signal according to an embodiment of this application. As shown in FIG. 10, the synchronization signal includes a synchronization signal sequence and common information, and the synchronization signal sequence may be located at a start location of the synchronization signal.

Optionally, the synchronization signal is transmitted periodically.

In this embodiment of this application, that the synchronization signal is transmitted periodically indicates that the network device may periodically send the synchronization signal. For the terminal device, the terminal device may periodically receive the synchronization signal, or may receive the synchronization signal as required. This is not limited. For example, the network device sends the synchronization signal in a periodicity T1, and the terminal device may receive the synchronization signal at an interval of one or more periodicities T1, or receive the synchronization signal as required.

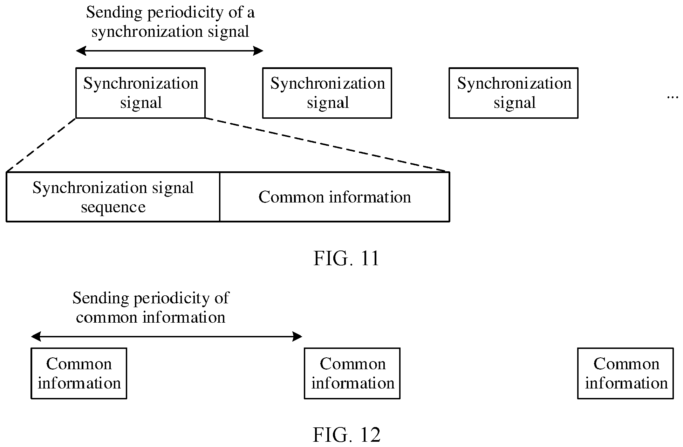

For example, FIG. 11 is another schematic diagram of a synchronization signal according to an embodiment of this application. As shown in FIG. 11, the network device periodically sends the synchronization signal, where the synchronization signal includes a synchronization signal sequence and common information, and the synchronization signal sequence may be located at a start location of the synchronization signal.

Solution 3: The common information is transmitted periodically.

In this embodiment of this application, that the common information is transmitted periodically indicates that the network device may periodically send the common information. For the terminal device, the terminal device may periodically receive the common information, or may receive the common information as required. This is not limited. For example, the network device sends the common information in a periodicity T2, and the terminal device may receive the common information at an interval of one or more periodicities T2, or receive the common information as required.

For example, FIG. 12 is a schematic diagram of common information according to an embodiment of this application. As shown in FIG. 12, the network device periodically sends the common information, and the terminal device may periodically receive the common information, or may receive the common information as required.

A periodicity of the common information, namely, a sending periodicity of the common information, may be configured by the network device, or may be predefined (for example, predefined in a standard). This is not limited.

Optionally, periodicities of different common information may be different.

It is assumed that the common information includes first-type common information and second-type common information, the first-type common information and the second-type common information are different, and periodicities of the first-type common information and the second-type common information are different.

This manner not only can design a proper periodicity based on an actual situation of the common information (for example, a priority of the common information, or a size of resources used for transmitting the common information), but also can improve resource utilization.

For example, if a priority of the first-type common information is higher than a priority of the second-type common information, the periodicity of the first-type common information may be less than the periodicity of the second-type common information. The first-type common information may include, for example, the warning information or information #1 and the information #2, and the second-type information may include, for example, the area identification information.

It may be understood that the foregoing description is an example, and this application is not limited thereto. For example, if a resource used for transmitting the first-type common information is less than a resource used for transmitting the second-type common information, the periodicity of the first-type common information may be less than the periodicity of the second-type common information. For another example, periodicities of the common information may be the same.

Optionally, a synchronization signal is transmitted periodically, and the periodicity of the common information may be associated with a periodicity of the synchronization signal.

In this case, the terminal device may determine the periodicity of the common information based on a determined periodicity of the synchronization signal and an association relationship between the periodicity of the synchronization signal and the periodicity of the common information, or may determine the periodicity of the synchronization signal based on a determined periodicity of the common information and an association relationship between the periodicity of the synchronization signal and the periodicity of the common information.

For example, the terminal device receives the common information from the network device through a first frequency resource after preset duration that passes after receiving of the synchronization signal is completed, where the preset duration is greater than 0 or equal to 0. The preset duration may be configured by the network device, or may be predefined (for example, predefined in a standard). This is not limited.

In a possible case, the periodicity of the synchronization signal is the same as the periodicity of the common information. Therefore, the common information may constantly appear after the synchronization signal. When the common information is close to the synchronization signal, decoding performance of the common information can be improved, and reliability of transmission of the common information can be improved.

For example, the terminal device receives the common information from the network device through the first frequency resource after preset duration that passes after receiving of the synchronization signal is completed each time.

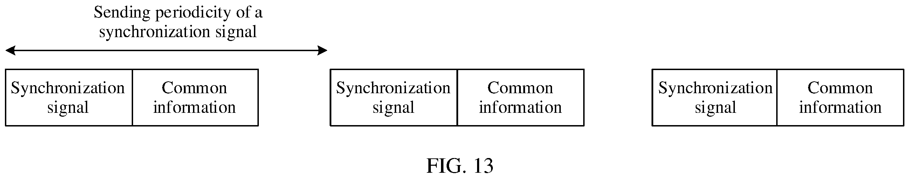

For example, FIG. 13 is a schematic diagram of transmission of common information and a synchronization signal. As shown in FIG. 13, the synchronization signal and the common information may be carried in different signals, a periodicity of the synchronization signal is the same as a periodicity of the common information, and the terminal device receives the common information after completely receiving the synchronization signal each time.

In another possible case, the periodicity of the synchronization signal is different from the periodicity of the common information.

For example, the terminal device receives the common information from the network device through the first frequency resource after preset duration that passes after the synchronization signal is received for X times, where X is an integer greater than 1 or equal to 1. In other words, the periodicity of the common information is an integer multiple of the periodicity of the synchronization signal.

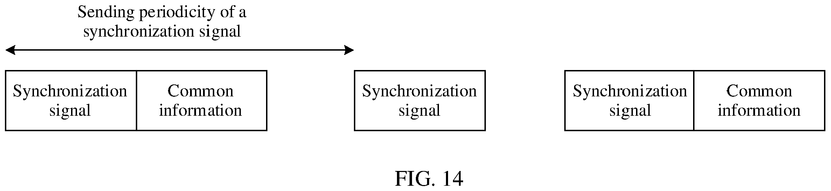

For example, FIG. 14 is another schematic diagram of transmission of common information and a synchronization signal. As shown in FIG. 14, the synchronization signal and the common information may be carried in different signals, a periodicity of the synchronization signal and a periodicity of the common information are different, and the terminal device receives the common information once whenever receiving the synchronization signal twice. FIG. 14 is used as an example. The periodicity of the common information may be twice the periodicity of the synchronization signal.

In still another possible case, the periodicity of the synchronization signal is the same as the periodicity of the first-type common information, and is different from the periodicity of the second-type common information.

For example, the terminal device receives the first-type common information from the network device through the first frequency resource after preset duration that passes after receiving of the synchronization signal is completed each time, and receives the second-type common information from the network device through the first frequency resource after preset duration that passes after the synchronization signal is received for Y times, where Y is an integer greater than or equal to 1.

It may be understood that the foregoing description is an example, and this application is not limited thereto. For example, the periodicity of the synchronization signal may not be associated with the periodicity of the common information.

Solution 4: The common information is indicated by a separate signal.

Based on the solution 4, the network device may use the separate signal to indicate the common information. For example, the network device may use the separate signal to indicate the common information that is not frequently sent and that has high overheads.

For example, in S710, that a terminal device receives common information from a network device through a first frequency resource includes: The terminal device receives a first signal from the network device through the first frequency resource, where the first signal includes the common information.

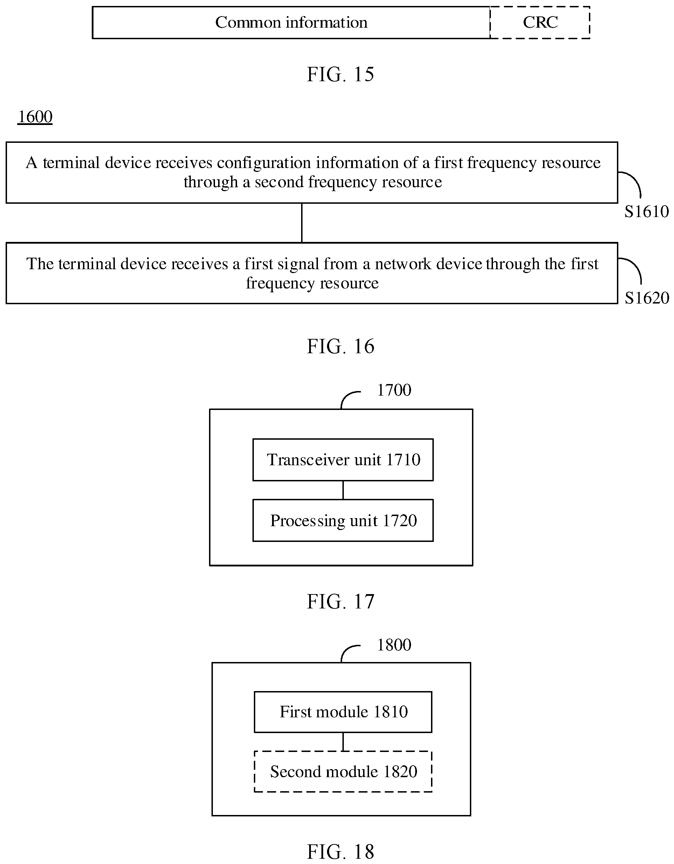

For example, FIG. 15 is still another schematic diagram of a first signal according to an embodiment of this application. As shown in FIG. 15, the first signal includes common information. Optionally, the first signal further includes CRC, and the CRC may be located at an end location.

Optionally, the first signal further includes a synchronization signal. The synchronization signal may be located at a start location of the first signal.

Optionally, the first signal further includes information #3, and the information #3 may indicate that the current first signal carries the common information.

The solution 4 may be, for example, applied to a scenario in which a synchronization signal is sent periodically. For example, a plurality of first signals may be sent between two synchronization signals, and the first signal may be, for example, used to indicate the common information.

It may be understood that the foregoing several solutions are merely examples for description, and this application is not limited thereto.

In addition, the common information may be transmitted by using any one of the foregoing solutions, or different solutions may be selected based on different common information. For example, if the common information is the information #1 or the information #2, the foregoing solution 2 may be used for transmission. If the common information is the area identification information, the foregoing solution 3 may be used for transmission. For another example, for common information that is frequently sent and has low overheads, the foregoing solution 1 or solution 3 may be used for transmission. For still another example, for common information that is not frequently sent and has high overheads, the foregoing solution 4 may be used for transmission.

Related solutions for the common information are mainly described above. It may be understood that common information transmitted on the first link may be predefined in a standard, or may be configured by the network side. For example, when the common information transmitted on the first link is configured by a network, the network may configure that the tracking area information, the information #1, and the information #2 are indicated on the first link, or may configure that the RAN area information, the information #1, the information #2, and the like are indicated on the first link.

The following describes a related solution for determining the first frequency resource. The following solution may be used independently, or may be used in combination with the foregoing solution. This is not limited.

FIG. 16 is a schematic diagram of an information transmission method 1600 according to an embodiment of this application. The method 1600 may include the following steps.

S1610: A terminal device receives configuration information of a first frequency resource through a second frequency resource.

Correspondingly, a network device sends the configuration information of the first frequency resource through the second frequency resource.

For descriptions of the first frequency resource and the second frequency resource, refer to the description of the foregoing term explanation part. Details are not described herein again.

The terminal device is used as an example. That a terminal device receives configuration information of a first frequency resource through a second frequency resource may be replaced with any one of the following: A terminal device receives configuration information of a first frequency resource via a second module, a terminal device receives configuration information of a first frequency resource on a second link, a terminal device receives configuration information of a first frequency resource when the terminal device is in a second state, and a terminal device receives configuration information of a first frequency resource when the terminal device is in a second mode.

S 1620: The terminal device receives a first signal from the network device through the first frequency resource.

Correspondingly, the network device sends the first signal through the first frequency resource.

The first signal represents a signal received by the terminal device via a first module, a signal received by the terminal device on a first link, a signal received when the terminal device is in a first state, or a signal received when the terminal device is in a first mode. For the first signal, refer to the foregoing term description. Details are not described herein again.

The configuration information of the first frequency resource is used by the terminal device to learn information about the first frequency resource, and then the terminal device may receive a signal from the network device through the first frequency resource.

Based on this solution, the network device configures configuration information of a frequency resource of the first link on the second link, so that after obtaining the frequency resource of the first link on the second link, the terminal device receives the signal on the first link through the frequency resource of the first link.

Optionally, the configuration information of the first frequency resource indicates a frequency domain location of the first frequency resource. The following provides description with reference to two cases.

### Case 1: In-band deployment

The first link and the second link are used as examples. Based on the case 1, a frequency domain resource occupied by the first link is located in a frequency band of the second link, that is, the first link and the second link belong to a same frequency band. For example, a bandwidth of the second link is F (for example, 100 MHz), and F1 (for example, 3 MHz) of the bandwidth may be allocated to the first link for use.

For example, the second link does not use a frequency domain resource of F1. Based on this case, the terminal device transmits a signal to the network device on the second link through the second frequency resource, where the second frequency resource is different from the first frequency resource.

For another example, the second link uses a frequency domain resource of F1, and the first link and the second link may use the frequency domain resource of F1 in a time division multiplexing manner, that is, the frequency domain resource of F1 is used by the first link in a period of time and is used by the second link in another period of time. Based on this case, in a first time period, the terminal device receives the first signal from the network device on the first link through the first frequency resource. In a second time period, the terminal device transmits a second signal to the network device on the second link through the first frequency resource. The second time period is different from the first time period.

Optionally, the frequency domain location of the first frequency resource includes a location of an RB.

For example, the configuration information of the first frequency resource may include a start location of an RB and a quantity of RBs. The terminal device may determine the location of the RB based on the start location of the RB and the quantity of the RBs, that is, may learn the frequency domain location of the first frequency resource.

For another example, the configuration information of the first frequency resource includes a start location of an RB. A quantity of RBs may be pre-agreed, or may be preconfigured by a network side. This is not limited. The terminal device may determine the location of the RB based on the start location of the RB, that is, may learn the frequency domain location of the first frequency resource.

Based on the case 1, the first link is equivalent to being deployed inside an existing system, and the existing system has a concept of an RB. Therefore, the network side may directly configure a location of an RB occupied by the first link, and the terminal device may determine, based on the location of the RB occupied by the first link, the frequency domain resource occupied by the first link. In addition, for the first link, no dedicated spectrum is required, and a WUR function may be deployed in an existing spectrum, which is more flexible for an operator.

### Case 2: Out-of-band deployment

The first link and the second link are used as examples. Based on the case 2, a frequency domain resource occupied by the first link is located out of a frequency band of the second link. For example, a frequency location of the second link is 2100 MHz to 2200 MHz, and a bandwidth is 100 MHz. The first link may be deployed at a location beyond 2100 MHz to 2200 MHz (for example, a location from 700 MHz to 702 MHz). In this case, the first link and the second link belong to different frequency bands.

Optionally, the frequency domain location of the first frequency resource is indicated in a manner of an ARFCN, that is, the network device configures an ARFCN value corresponding to the second frequency resource. The ARFCN may include, for example, one or more of the following: a start frequency location, a center frequency location, and an end frequency location.

Optionally, the frequency domain location of the first frequency resource is indicated in a manner of a raster index of the first signal, that is, the network device configures a raster index value corresponding to the second frequency resource. The raster index of the first signal may include, for example, one or more of the following: a start frequency location, a center frequency location, and an end frequency location. Optionally, a raster of the first signal may be a channel raster, or may be a SYNC raster, or a WUR raster separately defined for a WUR link.

Based on the case 2, one WUR network may correspond to cells of a plurality of frequency bands, and indication is more efficient. For example, an operator has one NR network of 2100 MHz to 2200 MHz and another NR network of 3500 MHz to 3600 MHz. The operator may deploy only one WUR network of 700 MHz to 702 MHz, and the WUR network is associated with the foregoing two NR networks. To be specific, paging information in the foregoing two NR networks may be transmitted over the WUR network.

It may be understood that, in embodiments of this application, "receiving" may be replaced with "detecting" or "reading". For example, "receiving a wake-up signal" may be replaced with "detecting a wake-up signal" or "reading a wake-up signal".

It may be further understood that, in some of the foregoing embodiments, "transmitting" is mentioned. Without special description, transmitting includes receiving and/or sending. For example, transmitting a signal may include receiving a signal and/or sending a signal.

It may be further understood that, in some of the foregoing embodiments, the main circuit, the wake-up circuit, the first link, and the second link are mainly used as examples for description. This application is not limited thereto. For example, "first link/wake-up circuit" may be replaced with "first module", may be replaced with "in a first state", or may be replaced with "in a first mode". For example, "the terminal device receives a signal on the first link" may be replaced with "the terminal device receives a signal via the first module (or a first circuit)". "Second link/Main circuit" may be replaced with "second module", may be replaced with "in a second state", or may be replaced with "in a second mode". For example, "the terminal device receives a signal on the second link" may be replaced with "the terminal device receives a signal via the second module (or a second circuit)".

It may be further understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, "terminal device" may be replaced with "first terminal device", and "network device" may be replaced with "second terminal device".

It may be further understood that examples in FIG. 7(a) to FIG. 16 in embodiments of this application are merely intended to help a person skilled in the art understand embodiments of this application, and are not intended to limit embodiments of this application to a specific scenario shown in the examples. It is clear that a person skilled in the art may make various equivalent modifications or changes based on the examples in FIG. 7(a) to FIG. 16, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that, in the foregoing method embodiments, the method and the operation implemented by the terminal device may alternatively be implemented by a component (for example, a chip or a circuit) of the terminal device. In addition, the method and the operation implemented by the network device may alternatively be implemented by a component (for example, a chip or a circuit) of the network device. This is not limited.

Corresponding to the methods provided in the foregoing method embodiments, embodiments of this application further provide a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

FIG. 17 is a schematic block diagram of a communication apparatus according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface or a communication unit. The processing unit 1720 may be configured to process data or a signal.

Optionally, the apparatus 1700 further includes a storage unit. The storage unit may be configured to store instructions and/or data. The processing unit 1720 may read the instructions and/or data in the storage unit, so that the apparatus implements an action of the terminal device in the foregoing method embodiments.

The apparatus 1700 may be configured to perform an action performed by a communication device (for example, the terminal device, or the network device) in the foregoing method embodiments. In this case, the apparatus 1700 may be the communication device or a component of the communication device. The transceiver unit 1710 is configured to perform an operation related to sending and receiving at a communication device (for example, a terminal device, or a network device) side in the foregoing method embodiments. The processing unit 1720 is configured to perform a processing-related operation at a communication device (for example, a terminal device, or a network device) side in the foregoing method embodiments.

When the apparatus 1700 is configured to implement a function of the terminal device in the foregoing method embodiments, the transceiver unit 1710 is configured to receive area identification information from a network device through a first frequency resource. The processing unit 1720 is configured to perform an area update procedure based on the area identification information through a second frequency resource, or the transceiver unit 1710 is configured to receive system information through a second frequency resource.

The apparatus 1700 may implement a step or procedure performed by the terminal device in the method embodiments according to embodiments of this application. The apparatus 1700 may include a unit configured to perform the methods performed by the terminal device in embodiments shown in FIG. 7(a) to FIG. 7(c).

When the apparatus 1700 is configured to implement a function of the network device in the foregoing method embodiments, the transceiver unit 1710 is configured to send area identification information through a first frequency resource.

The apparatus 1700 may implement a step or procedure performed by the network device in the method embodiments according to embodiments of this application. The apparatus 1700 may include a unit configured to perform the methods performed by the network device in embodiments shown in FIG. 7(a) to FIG. 7(c).

For a more detailed description of the apparatus 1700, refer to the related description in the foregoing method embodiments. Details are not described herein again.

It should be further understood that the apparatus 1700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1700 may be specifically the terminal device in the foregoing embodiments, and may be configured to perform procedures and/or steps corresponding to the terminal device in the foregoing method embodiments. To avoid repetition, details are not described herein again.

The apparatus 1700 in the foregoing solutions has a function of implementing a corresponding step performed by a device (for example, a terminal device or a network device) in the foregoing methods. The function may be implemented by hardware, or may be implemented by hardware executing corresponding software. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver). Another unit, such as the processing unit, may be replaced with a processor to separately perform a sending and receiving operation and a related processing operation in the method embodiments.

In addition, the transceiver unit 1710 may alternatively be a transceiver circuit (which may include, for example, a receiving circuit and a sending circuit), and the processing unit may be a processing circuit.

It should be noted that the apparatus in FIG. 17 may be a network element or device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 18 is a schematic block diagram of another communication apparatus according to an embodiment of this application. The apparatus 1800 includes a first module 1810. The first module 1810 may be, for example, a wake-up circuit, or may be a module (for example, a receiving module) of a wake-up circuit. The first module 1810 may be configured to perform an operation performed by the wake-up circuit at a communication device (for example, a terminal device, or a network device) side in the foregoing method embodiments, may be configured to perform an operation performed on the first link at a communication device (for example, a terminal device, or a network device) side in the foregoing method embodiments, may be configured to perform an operation performed when a communication device (for example, a terminal device or a network device) in the foregoing method embodiments is in the first state, or may be configured to perform an operation performed when a communication device (for example, a terminal device or a network device) in the foregoing method embodiments is in the first mode. The following uses the terminal device as an example for description.

For example, the terminal device receives area identification information from the network device via the first module 1810.

Optionally, the apparatus 1800 includes a second module 1820. The second module 1820 may be, for example, a main circuit, or may be a module (for example, a receiving module) of a main circuit. The first module 1810 and the second module 1820 may be integrated together, or may be disposed separately. The second module 1820 may be configured to perform an operation performed by the main circuit at a communication device (for example, a terminal device, or a network device) side in the foregoing method embodiments, may be configured to perform an operation performed on the second link at a communication device (for example, a terminal device, or a network device) side in the foregoing method embodiments, may be configured to perform an operation performed when a communication device (for example, a terminal device or a network device) in the foregoing method embodiments is in the second state, or may be configured to perform an operation performed when a communication device (for example, a terminal device or a network device) in the foregoing method embodiments is in the second mode.

For example, the terminal device performs an area update procedure or receives system information via the second module 1810.

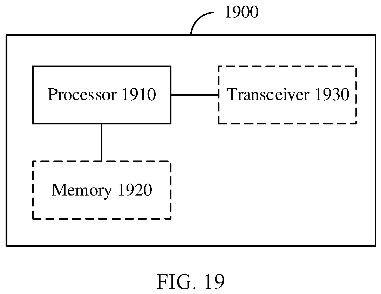

FIG. 19 is a schematic block diagram of still another communication apparatus according to an embodiment of this application. The apparatus 1900 includes a processor 1910. The processor 1910 is coupled to a memory 1920. The memory 1920 is configured to store a computer program or instructions and/or data. The processor 1910 is configured to execute the computer program or the instructions stored in the memory 1920, or read the data stored in the memory 1920, to perform the methods in the foregoing method embodiments.

In some embodiments, there are one or more processors 1910.

In some embodiments, there are one or more memories 1920.

In some embodiments, the memory 1920 and the processor 1910 are integrated together, or disposed separately.

In some embodiments, as shown in FIG. 19, the apparatus 1900 further includes a transceiver 1930, and the transceiver 1930 is configured to receive and/or send a signal. For example, the processor 1910 is configured to control the transceiver 1930 to receive and/or send a signal.

In a solution, the apparatus 1900 is configured to implement an operation performed by a device (for example, a terminal device, or a network device) in the foregoing method embodiments.

For example, the processor 1910 is configured to execute the computer program or instructions stored in the memory 1920, to implement a related operation of the network device in the foregoing method embodiments.

For another example, the processor 1910 is configured to execute the computer program or instructions stored in the memory 1920, to implement a related operation of the terminal device in the foregoing method embodiments.

It should be understood that, the processor mentioned in embodiments of this application may be a central processing unit (central processing unit, CPU), or may further be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include a plurality of forms below: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described herein is intended to include, but is not limited to, these and any other suitable type of memory.

An embodiment of this application further provides a computer-readable storage medium. The computer-readable storage medium stores computer instructions used to implement the methods performed by a device (for example, a terminal device or a network device) in the foregoing method embodiments.

For example, when a computer program is executed by a computer, the computer is enabled to implement the methods performed by the network device in the foregoing method embodiments.

For another example, when a computer program is executed by a computer, the computer is enabled to implement the methods performed by the terminal device in the foregoing method embodiments.

An embodiment of this application further provides a computer program product, including instructions. When the instructions are executed by a computer, the methods performed by a device (for example, a terminal device or a network device) in the foregoing method embodiments are implemented.

For explanations and beneficial effects of related content in any apparatus provided above, refer to the corresponding method embodiment provided above. Details are not described herein again.

In the several embodiments provided in this application, it should be understood that the disclosed apparatuses and methods may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

Based on the foregoing description, this application further provides the following embodiments:
Embodiment 1: An information transmission method, including:
   a terminal device receives area identification information from a network device through a first frequency resource; and
   the terminal device performs an area update procedure or receives system information based on the area identification information through a second frequency resource.
Embodiment 2: The method according to Embodiment 1, where
   the area identification information includes a tracking area identifier, and that the terminal device performs an area update procedure or receives system information based on the area identification information through a second frequency includes: When the terminal device determines, based on the tracking area identifier, that a tracking area of the terminal device is updated, the terminal device performs a tracking area update procedure through the second frequency resource;
   the area identification information includes an access network area identifier, and that the terminal device performs an area update procedure or receives system information based on the area identification information through a second frequency includes: When the terminal device determines, based on the access network area identifier, that an access network area of the terminal device is updated, the terminal device performs an access network area update procedure through the second frequency resource; or
   the area identification information includes a cell identifier, and that the terminal device performs an area update procedure or receives system information based on the area identification information through a second frequency includes: When the terminal device determines, based on the cell identifier, that a cell of the terminal device is updated, the terminal device receives, through the second frequency resource, system information of a cell indicated by the cell identifier.
Embodiment 3: The method according to Embodiment 1 or 2, where that a terminal device receives area identification information from a network device through a first frequency resource includes:
   the terminal device receives a first signal from the network device through the first frequency resource, where the first signal includes the area identification information, and the first signal further includes paging information.
Embodiment 4: The method according to Embodiment 1 or 2, where that a terminal device receives area identification information from a network device through a first frequency resource includes:
   the terminal device receives a synchronization signal from the network device through the first frequency resource, where the synchronization signal includes the area identification information.
Embodiment 5: The method according to Embodiment 1 or 2, where the area identification information is transmitted periodically.
Embodiment 6: The method according to Embodiment 5, where the method further includes:
   the terminal device receives a synchronization signal from the network device through the first frequency resource, where the synchronization signal is transmitted periodically; and
   that a terminal device receives area identification information from a network device through a first frequency resource includes:
      the terminal device receives the area identification information from the network device through the first frequency resource after preset duration that passes after receiving of the synchronization signal is completed, where the preset duration is greater than 0 or equal to 0.
Embodiment 7: The method according to Embodiment 5 or 6, where
   a periodicity of the area identification information is the same as a periodicity of the synchronization signal; or
   a periodicity of the area identification information is an integer multiple of a periodicity of the synchronization signal.
Embodiment 8: The method according to any one of Embodiments 1 to 7, where the terminal device includes a first module and a second module, where
   the terminal device receives the area identification information via the first module, and the terminal device performs the area update procedure or receives the system information via the second module.
Embodiment 9: The method according to any one of Embodiments 1 to 8, where
   a waveform of the first signal is different from a waveform of a second signal, and/or a modulation scheme of the first signal is different from a modulation scheme of the second signal, where
   the first signal is a signal that carries the area identification information and/or the paging information, and the second signal is a signal transmitted by the terminal device through the second frequency resource.
Embodiment 10: The method according to any one of Embodiments 1 to 9, where
   the waveform and/or the modulation scheme of the first signal are/is on-off keying OOK, and/or
   the waveform and/or the modulation scheme of the second signal are/is orthogonal frequency division multiplexing OFDM, where
   the first signal is the signal that carries the area identification information and/or the paging information, and the second signal is the signal transmitted by the terminal device through the second frequency resource.
Embodiment 11: The method according to any one of Embodiments 1 to 10, where the method further includes:
   the terminal device receives the paging information from the network device through the first frequency resource, where the paging information includes information about one or more terminal devices that need to receive paging, and the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 12: The method according to Embodiment 11, where that the terminal device receives first information from the network device and/or initiates random access includes:
   the terminal device receives the first information from the network device and/or initiates random access through the second frequency resource.
Embodiment 13: The method according to Embodiment 11 or 12, where the terminal device includes the first module and the second module, where
   the terminal device receives the area identification information and the paging information via the first module, and the terminal device receives the first information and/or initiates random access via the second module.
Embodiment 14: An information transmission method, including:
   a network device sends area identification information through a first frequency resource, where the first frequency resource is further used to transmit paging information, and the paging information includes information about one or more terminal devices that need to receive paging.
Embodiment 15: The method according to Embodiment 14, where
   the area identification information includes one or more of the following: a tracking area identifier, an access network area identifier, and a cell identifier.
Embodiment 16: The method according to Embodiment 14 or 15, where that a network device sends area identification information through a first frequency resource includes:
   the network device sends a first signal through the first frequency resource, where the first signal includes the area identification information, and the first signal further includes the paging information.
Embodiment 17: The method according to Embodiment 14 or 15, where that a network device sends area identification information through a first frequency resource includes:
   the network device sends a synchronization signal through the first frequency resource, where the synchronization signal includes the area identification information.
Embodiment 18: The method according to Embodiment 14 or 15, where the area identification information is transmitted periodically.
Embodiment 19: The method according to Embodiment 18, where the method further includes:
   the network device sends a synchronization signal through the first frequency resource, where the synchronization signal is transmitted periodically; and
   that a network device sends area identification information through a first frequency resource includes:
      the network device sends the area identification information through the first frequency resource after preset duration that passes after sending of the synchronization signal is completed, where the preset duration is greater than 0 or equal to 0.
Embodiment 20: The method according to Embodiment 18 or 19, where
   a periodicity of the area identification information is the same as a periodicity of the synchronization signal; or
   a periodicity of the area identification information is an integer multiple of a periodicity of the synchronization signal.
Embodiment 21: The method according to any one of Embodiments 14 to 20, where the network device includes a first module and a second module, where
   the network device sends the area identification information via the first module.
Embodiment 22: The method according to any one of Embodiments 14 to 21, where
   a waveform of the first signal is different from a waveform of a second signal, and/or a modulation scheme of the first signal is different from a modulation scheme of the second signal, where
   the first signal is a signal that carries the area identification information and/or the paging information, and the second signal is a signal transmitted by the network device through a second frequency resource.
Embodiment 23: The method according to any one of Embodiments 14 to 22, where
   the waveform and/or the modulation scheme of the first signal are/is on-off keying OOK, and/or
   the waveform and/or the modulation scheme of the second signal are/is orthogonal frequency division multiplexing OFDM, where
   the first signal is the signal that carries the area identification information and/or the paging information, and the second signal is the signal transmitted by the network device through the second frequency resource.
Embodiment 24: The method according to any one of Embodiments 14 to 23, where the method further includes:
   the network device sends the paging information through the first frequency resource, where the paging information includes the information about the one or more terminal devices that need to receive the paging; and
   the network device sends first information to the one or more terminal devices and/or receives a random access preamble sequence from the one or more terminal devices, where
   the first information includes one or more of the following information: paging downlink control information DCI, a paging message paging message, and a paging early indication PEI.
Embodiment 25: The method according to Embodiment 24, where that the network device sends first information to the one or more terminal devices and/or receives a random access preamble sequence from the one or more terminal devices includes:
   the network device sends the first information to the one or more terminal devices and/or receives the random access preamble sequence from the one or more terminal devices through the second frequency resource.
Embodiment 26: The method according to Embodiment 24 or 25, where the network device includes the first module and the second module, where
   the network device sends the area identification information and the paging information via the first module, and the network device sends the first information to the one or more terminal devices and/or receives the random access preamble sequence from the one or more terminal devices via the second module.
Embodiment 27: An information transmission method, including:
   a network device sends common information through a first frequency resource, where the first frequency resource is further used to transmit paging information, and the paging information includes information about one or more terminal devices that need to receive paging.
Embodiment 28: The method according to Embodiment 27, where the common information includes one or more of the following:
   warning information or warning information reception indication information, system information change indication information, and area identification information.
Embodiment 29: The method according to Embodiment 28, where
   the system information change indication information indicates that a system information block 1 is changed.
Embodiment 30: The method according to Embodiment 28, where
   the warning information includes first warning information and second warning information; or
   the warning information includes first warning information, and the method further includes: The network device sends second warning information through a second frequency resource.
Embodiment 31: The method according to any one of Embodiments 27 to 30, where that a network device sends common information through a first frequency resource includes:
   the network device sends a first signal through the first frequency resource, where the first signal includes the common information, and the first signal further includes the paging information.
Embodiment 32: The method according to any one of Embodiments 27 to 30, where that a network device sends common information through a first frequency resource includes:
   the network device sends a synchronization signal through the first frequency resource, where the synchronization signal includes the common information.
Embodiment 33: The method according to any one of Embodiments 27 to 30, where the common information is transmitted periodically.
Embodiment 34: The method according to Embodiment 33, where the synchronization signal is transmitted periodically; and
   that the network device sends a synchronization signal through the first frequency resource includes:
   the network device sends the common information through the first frequency resource after preset duration that passes after sending of the synchronization signal is completed, where the preset duration is greater than 0 or equal to 0.
Embodiment 35: The method according to Embodiment 33 or 34, where
   a periodicity of the common information is the same as a periodicity of the synchronization signal; or
   a periodicity of the common information is an integer multiple of a periodicity of the synchronization signal.
Embodiment 36: The method according to any one of Embodiments 33 to 35, where the common information includes first-type common information and second-type common information, the first-type common information and the second-type common information are different, and periodicities of the first-type common information and the second-type common information are different.
Embodiment 37: The method according to Embodiment 28 or 29, where the common information is the system information change indication information, the system information change indication information indicates that system information is changed, and the method further includes: The network device sends the system information through a second frequency resource.
Embodiment 38: The method according to Embodiment 28 or 30, where the common information is the warning information reception indication information, and the method further includes:
   after sending the warning information reception indication information, the network device sends the warning information through the first frequency resource.
Embodiment 39: The method according to any one of Embodiments 27 to 38, where the method further includes:
   the network device sends the paging information through the first frequency resource, where the one or more terminal devices include a terminal device; and
   the network device sends first information to the terminal device and/or receiving a random access preamble sequence from the terminal device, where
   the first information includes one or more of the following information: paging downlink control information DCI, a paging message paging message, and a paging early indication PEI.
Embodiment 40: The method according to Embodiment 39, where that the network device sends first information to the terminal device and/or receives a random access preamble sequence from the terminal device includes:
   the network device sends the first information to the terminal device and/or receives the random access preamble sequence from the terminal device through the second frequency resource.
Embodiment 41: The method according to Embodiment 39 or 40, where the network device includes a first module and a second module, where
   the network device sends the common information and the paging information via the first module, and the network device sends the first information to the terminal device and/or receives the random access preamble sequence from the terminal device via the second module.
Embodiment 42: An information transmission method, including:
   a terminal device receives common information from a network device through a first frequency resource, where the first frequency resource is further used to transmit paging information, and the paging information includes information about one or more terminal devices that need to receive paging.
Embodiment 43: The method according to Embodiment 42, where the common information includes one or more of the following:
   warning information or warning information reception indication information, system information change indication information, and area identification information.
Embodiment 44: The method according to Embodiment 43, where
   the system information change indication information indicates that a system information block 1 is changed.
Embodiment 45: The method according to Embodiment 43, where
   the warning information includes first warning information and second warning information; or
   the warning information includes first warning information, and the method further includes: the terminal device receives second warning information from the network device through a second frequency resource.
Embodiment 46: The method according to any one of Embodiments 42 to 45, where that a terminal device receives common information from a network device through a first frequency resource includes:
   the terminal device receives a first signal from the network device through the first frequency resource, where the first signal includes the common information, and the first signal further includes the paging information.
Embodiment 47: The method according to any one of Embodiments 42 to 45, where that a terminal device receives common information from a network device through a first frequency resource includes:
   the terminal device receives a synchronization signal from the network device through the first frequency resource, where the synchronization signal includes the common information.
Embodiment 48: The method according to any one of Embodiments 42 to 45, where the common information is transmitted periodically.
Embodiment 49: The method according to Embodiment 48, where the method further includes:
   the terminal device receives a synchronization signal from the network device through the first frequency resource, where the synchronization signal is transmitted periodically; and
   that a terminal device receives common information from a network device through a first frequency resource includes:
      the terminal device receives the common information from the network device through the first frequency resource after preset duration that passes after receiving of the synchronization signal is completed, where the preset duration is greater than 0 or equal to 0.
Embodiment 50: The method according to Embodiment 48 or 49, where
   a periodicity of the common information is the same as a periodicity of the synchronization signal; or
   a periodicity of the common information is an integer multiple of a periodicity of the synchronization signal.
Embodiment 51: The method according to any one of Embodiments 48 to 50, where the common information includes first-type common information and second-type common information, the first-type common information and the second-type common information are different, and periodicities of the first-type common information and the second-type common information are different.
Embodiment 52: The method according to Embodiment 43, where the common information is the area identification information; and
   if the area identification information includes a tracking area identifier, and the terminal device determines, based on the tracking area identifier, that a tracking area of the terminal device is updated, the method further includes: The terminal device performs a tracking area update procedure through a second frequency resource;
   if the area identification information includes an access network area identifier, and the terminal device determines, based on the access network area identifier, that an access network area of the terminal device is updated, the method further includes: The terminal device performs an access network area update procedure through a second frequency resource; or
   if the area identification information includes a cell identifier, and the terminal device determines, based on the cell identifier, that a cell of the terminal device is updated, the method further includes: The terminal device receives, through a second frequency resource, system information of a cell indicated by the cell identifier.
Embodiment 53: The method according to Embodiment 43 or 44, where the common information is the system information change indication information, the system information change indication information indicates that system information is changed, and the method further includes: The terminal device receives the system information through a second frequency resource.
Embodiment 54: The method according to Embodiment 43 or 45, where the common information is the warning information reception indication information, and the method further includes:
   after receiving the warning information reception indication information, the terminal device receives the warning information from the network device through the first frequency resource.
Embodiment 55: The method according to any one of Embodiments 42 to 54, where the method further includes:
   the terminal device receives the paging information from the network device through the first frequency resource, where the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 56: The method according to Embodiment 55, where that the terminal device receives first information from the network device and/or initiates random access includes:
   the terminal device receives the first information from the network device and/or initiates random access through the second frequency resource.
Embodiment 57: The method according to Embodiment 55 or 56, where the terminal device includes a first module and a second module, where
   the terminal device receives the common information and the paging information via the first module, and the terminal device receives the first information from the network device and/or initiates random access via the second module.
Embodiment 58: The method according to any one of Embodiments 27 to 57, where
   a waveform of a signal that carries the common information is the same as a waveform of a signal that carries the paging information, and/or a modulation scheme of the/a signal that carries the common information is the same as a modulation scheme of the/a signal that carries the paging information.
Embodiment 59: The method according to any one of Embodiments 27 to 58, where
   the modulation scheme of the signal that carries the common information and the modulation scheme of the signal that carries the paging information are on-off keying OOK, and/or
   the waveform of the signal that carries the common information and/or the waveform of the signal that carries the paging information are/is OOK.
Embodiment 60: An information transmission method, including:
   a terminal device receives warning information or warning information reception indication information from a network device through a first frequency resource.
Embodiment 61: The method according to Embodiment 60, where the warning information reception indication information indicates to receive the warning information.
Embodiment 62: The method according to Embodiment 60 or 61, where
   the warning information includes first warning information and second warning information; or
   the warning information includes first warning information, and the method further includes: The terminal device receives second warning information from the network device through a second frequency resource.
Embodiment 63: The method according to any one of Embodiments 60 to 62, where when the terminal device receives the warning information reception indication information from the network device through the first frequency resource, the method further includes:
   after receiving the warning information reception information, the terminal device receives the warning information from the network device through the first frequency resource.
Embodiment 64: The method according to any one of Embodiments 60 to 63, where the method further includes:
   the terminal device receives paging information from the network device through the first frequency resource, where the paging information includes information about one or more terminal devices that need to receive paging, and the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 65: The method according to Embodiment 64, where that the terminal device receives first information from the network device and/or initiates random access includes:
   the terminal device receives the first information from the network device and/or initiates random access through the second frequency resource.
Embodiment 66: The method according to Embodiment 64 or 65, where the terminal device includes a first module and a second module, where
   the terminal device receives the warning information or the warning information reception indication information from the network device via the first module, the terminal device receives the paging information from the network device via the first module, and the terminal device receives the first information from the network device and/or initiates random access via the second module.
Embodiment 67: An information transmission method, including:
   a network device sends warning information or warning information reception indication information through a first frequency resource.
Embodiment 68: The method according to Embodiment 67, where the warning information reception indication information indicates to receive the warning information.
Embodiment 69: The method according to Embodiment 67 or 68, where
   the warning information includes first warning information and second warning information; or
   the warning information includes first warning information, and the method further includes: The network device sends second warning information through a second frequency resource.
Embodiment 70: The method according to any one of Embodiments 67 to 69, where when the network device sends the warning information reception indication information through the first frequency resource, the method further includes:
   after sending the warning information reception information, the network device sends the warning information through the first frequency resource.
Embodiment 71: The method according to any one of Embodiments 67 to 70, where the method further includes:
   the network device sends paging information through the first frequency resource, where the paging information includes information about one or more terminal devices that need to receive paging; and
   the network device sends first information to the one or more terminal devices and/or receives a random access preamble sequence from the one or more terminal devices, where
   the first information includes one or more of the following information: paging downlink control information DCI, a paging message paging message, and a paging early indication PEI.
Embodiment 72: The method according to Embodiment 71, where that the network device sends first information to the one or more terminal devices and/or receives a random access preamble sequence from the one or more terminal devices includes:
   the network device sends the first information to the one or more terminal devices and/or receives the random access preamble sequence from the one or more terminal devices through the second frequency resource.
Embodiment 73: The method according to Embodiment 71 or 72, where the network device includes a first module and a second module, where
   the network device sends the warning information or the warning information reception indication information via the first module, the network device sends the paging information via the first module, and the network device sends the first information to the one or more terminal devices and/or receives the random access preamble sequence from the one or more terminal devices via the second module.
Embodiment 74: The method according to any one of Embodiments 60 to 73, where the first frequency resource is further used to transmit the paging information, and the paging information includes the information about the one or more terminal devices that need to receive the paging; and
   a waveform of a signal that carries the warning information or the warning information reception indication information is the same as a waveform of a signal that carries the paging information, and/or a modulation scheme of the/a signal that carries the warning information or the warning information reception indication information is the same as a modulation scheme of the/a signal that carries the paging information.
Embodiment 75: The method according to any one of Embodiments 60 to 74, where
   the modulation scheme of the signal that carries the warning information or the warning information reception indication information and the modulation scheme of the signal that carries the paging information are on-off keying OOK, and/or
   the waveform of the signal that carries the warning information or the warning information reception indication information and/or the waveform of the signal that carries the paging information are/is OOK.
Embodiment 76: An information transmission method, including:
   a terminal device receives system information change indication information from a network device through a first frequency resource, where the system information change indication information indicates that system information is changed; and
   the terminal device receives the system information from the network device through a second frequency resource.
Embodiment 77: The method according to Embodiment 76, where the system information is a system information block 1.
Embodiment 78: The method according to Embodiment 76 or 77, where the system information includes one or more of the following:
   common configuration information of a serving cell, configuration information of a timer or a counter of the terminal device, and configuration information of unified access control.
Embodiment 79: The method according to any one of Embodiments 76 to 78, where the terminal device includes a first module and a second module, where
   the terminal device receives the system information change indication information via the first module, and the terminal device receives the system information via the second module.
Embodiment 80: The method according to any one of Embodiments 76 to 79, where
   a waveform of a signal transmitted by the terminal device through the first frequency resource is different from a waveform of a signal transmitted by the terminal device through the second frequency resource, and/or a modulation scheme of the/a signal transmitted by the terminal device through the first frequency resource is different from a modulation scheme of the/a signal transmitted by the terminal device through the second frequency resource.
Embodiment 81: The method according to any one of Embodiments 76 to 80, where
   the waveform and/or the modulation scheme of the signal transmitted by the terminal device through the first frequency resource are/is on-off keying OOK, and/or
   the waveform and/or the modulation scheme of the signal transmitted by the terminal device through the second frequency resource are/is orthogonal frequency division multiplexing OFDM.
Embodiment 82: The method according to any one of Embodiments 76 to 81, where the method further includes:
   the terminal device receives paging information from the network device through the first frequency resource, where the paging information includes information about one or more terminal devices that need to receive paging, and the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 83: The method according to Embodiment 82, where that the terminal device receives first information from the network device and/or initiates random access includes:
   the terminal device receives the first information from the network device and/or initiates random access through the second frequency resource.
Embodiment 84: The method according to Embodiment 82 or 83, where the terminal device includes the first module and the second module, where
   the terminal device receives the system information change indication information and the paging information from the network device via the first module, the terminal device receives the system information from the network device via the second module, and the terminal device receives the first information from the network device and/or initiates random access via the second module.
Embodiment 85: An information transmission method, including:
   a network device sends system information change indication information through a first frequency resource, where the system information change indication information indicates that system information is changed; and
   the network device sends the system information through a second frequency resource.
Embodiment 86: The method according to Embodiment 85, where the system information is a system information block 1.
Embodiment 87: The method according to Embodiment 85 or 86, where the system information includes one or more of the following:
   common configuration information of a serving cell, configuration information of a timer or a counter of a terminal device, and configuration information of unified access control.
Embodiment 88: The method according to any one of Embodiments 85 to 87, where the network device includes a first module and a second module, where
   the network device sends the system information change indication information via the first module, and the network device sends the system information via the second module.
Embodiment 89: The method according to any one of Embodiments 85 to 88, where
   a waveform of a signal transmitted by the network device through the first frequency resource is different from a waveform of a signal transmitted by the network device through the second frequency resource, and/or a modulation scheme of the/a signal transmitted by the network device through the first frequency resource is different from a modulation scheme of the/a signal transmitted by the network device through the second frequency resource.
Embodiment 90: The method according to any one of Embodiments 85 to 89, where
   the waveform and/or the modulation scheme of the signal transmitted by the network device through the first frequency resource are/is on-off keying OOK, and/or
   the waveform and/or the modulation scheme of the signal transmitted by the network device through the second frequency resource are/is orthogonal frequency division multiplexing OFDM.
Embodiment 91: The method according to any one of Embodiments 85 to 90, where the method further includes:
   the network device sends paging information through the first frequency resource, where the paging information includes information about one or more terminal devices that need to receive paging; and
   the network device sends first information to the one or more terminal devices and/or receives a random access preamble sequence from the one or more terminal devices, where
   the first information includes one or more of the following information: paging downlink control information DCI, a paging message paging message, and a paging early indication PEI.
Embodiment 92: The method according to Embodiment 91, where that the network device sends first information to the one or more terminal devices and/or receives a random access preamble sequence from the one or more terminal devices includes:
   the network device sends the first information to the one or more terminal devices and/or receives the random access preamble sequence from the one or more terminal devices through the second frequency resource.
Embodiment 93: The method according to Embodiment 91 or 92, where the network device includes the first module and the second module, where
   the network device sends the system information change indication information and the paging information via the first module, the network device sends the system information via the second module, and the network device sends the first information to the one or more terminal devices and/or receives the random access preamble sequence from the one or more terminal devices via the second module.
Embodiment 94: An information transmission method, where the method is applied to a terminal device, the terminal device includes a first module and a second module, and the method includes:
   the terminal device receives configuration information of a first frequency resource via the second module; and
   the terminal device receives a first signal from a network device through the first frequency resource via the first module.
Embodiment 95: The method according to Embodiment 94, where the first signal includes one or more of the following: a synchronization signal, common information, and paging information, where the paging information includes information about one or more terminal devices that need to receive paging.
Embodiment 96: The method according to Embodiment 94 or 95, where the configuration information of the first frequency resource indicates a frequency domain location of the first frequency resource.
Embodiment 97: The method according to Embodiment 96, where the frequency domain location of the first frequency resource includes a location of a resource block.
Embodiment 98: The method according to any one of Embodiments 94 to 97, where the method further includes:
   the terminal device transmits a signal to the network device through a second frequency resource via the second module, where the second frequency resource is different from the first frequency resource.
Embodiment 99: The method according to any one of Embodiments 94 to 97, where that the terminal device receives a first signal from a network device through the first frequency resource via the first module includes:
   the terminal device receives, in a first time period, the first signal from the network device through the first frequency resource via the first module; and
   the method further includes:
      the terminal device transmits, in a second time period, a second signal to the network device through the first frequency resource via the second module, where the second time period is different from the first time period.
Embodiment 100: The method according to Embodiment 96, where the frequency domain location of the first frequency resource is an absolute radio frequency channel number, or the frequency domain location of the first frequency resource is a raster index of the first signal.
Embodiment 101: The method according to Embodiment 100, where the frequency domain location of the first frequency resource includes one or more of the following: a start frequency location, a center frequency location, and an end frequency location.
Embodiment 102: The method according to any one of Embodiments 94 to 101, where
   a waveform of a signal transmitted by the terminal device via the first module is different from a waveform of a signal transmitted by the terminal device via the second module, and/or a modulation scheme of the/a signal transmitted by the terminal device via the first module is different from a modulation scheme of the/a signal transmitted by the terminal device via the second module.
Embodiment 103: The method according to any one of Embodiments 94 to 102, where
   the waveform and/or the modulation scheme of the signal transmitted by the terminal device via the first module are/is on-off keying OOK, and/or
   the waveform and/or the modulation scheme of the signal transmitted by the terminal device via the second module are/is orthogonal frequency division multiplexing OFDM.
Embodiment 104: The method according to any one of Embodiments 94 to 103, where the method further includes:
   the terminal device receives the paging information from the network device through the first frequency resource, where the paging information includes the information about the one or more terminal devices that need to receive the paging, and the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 105: The method according to Embodiment 104, where that the terminal device receives first information from the network device and/or initiates random access includes:
   the terminal device receives the first information from the network device and/or initiates random access through the second frequency resource.
Embodiment 106: The method according to Embodiment 104 or 105, where
   the terminal device receives the paging information from the network device via the first module, and the terminal device receives the first information from the network device and/or initiates random access via the second module.
Embodiment 107: An information transmission method, where the method includes:
   a terminal device receives configuration information of a first frequency resource through a second frequency resource; and
   the terminal device receives a first signal from a network device through the first frequency resource.
Embodiment 108: The method according to Embodiment 107, where the first signal includes one or more of the following: a synchronization signal, common information, and paging information, where the paging information includes information about one or more terminal devices that need to receive paging.
Embodiment 109: The method according to Embodiment 107 or 108, where the configuration information of the first frequency resource indicates a frequency domain location of the first frequency resource.
Embodiment 110: The method according to Embodiment 109, where the frequency domain location of the first frequency resource includes a location of a resource block.
Embodiment 111: The method according to any one of Embodiments 107 to 110, where the method further includes:
   the terminal device transmits a signal to the network device through the second frequency resource, where the second frequency resource is different from the first frequency resource.
Embodiment 112: The method according to any one of Embodiments 107 to 110, where that the terminal device receives a first signal from a network device through the first frequency resource includes:
   the terminal device receives, in a first time period, the first signal from the network device through the first frequency resource; and
   the method further includes:
      the terminal device transmits, in a second time period, a second signal to the network device through the first frequency resource, where the second time period is different from the first time period.
Embodiment 113: The method according to Embodiment 109, where the frequency domain location of the first frequency resource is an absolute radio frequency channel number, or the frequency domain location of the first frequency resource is a raster index of the first signal.
Embodiment 114: The method according to Embodiment 113, where the frequency domain location of the first frequency resource includes one or more of the following: a start frequency location, a center frequency location, and an end frequency location.
Embodiment 115: The method according to any one of Embodiments 107 to 114, where
   a waveform of a signal transmitted by the terminal device through the first frequency resource is different from a waveform of a signal transmitted by the terminal device through the second frequency resource, and/or a modulation scheme of the/a signal transmitted by the terminal device through the first frequency resource is different from a modulation scheme of the/a signal transmitted by the terminal device through the second frequency resource.
Embodiment 116: The method according to any one of Embodiments 107 to 115, where
   the waveform and/or the modulation scheme of the signal transmitted by the terminal device through the first frequency resource are/is on-off keying OOK, and/or
   the waveform and/or the modulation scheme of the signal transmitted by the terminal device through the second frequency resource are/is orthogonal frequency division multiplexing OFDM.
Embodiment 117: The method according to any one of Embodiments 107 to 116, where the method further includes:
   the terminal device receives the paging information from the network device through the first frequency resource, where the paging information includes the information about the one or more terminal devices that need to receive the paging, and the one or more terminal devices include the terminal device; and
   the terminal device receives first information from the network device and/or initiates random access, where
   the first information includes one or more of the following information: paging downlink control information DCI, a paging message paging message, and a paging early indication PEI.
Embodiment 118: The method according to Embodiment 117, where that the terminal device receives first information from the network device and/or initiates random access includes:
   the terminal device receives the first information from the network device and/or initiates random access through the second frequency resource.
Embodiment 119: An information transmission method, where the method is applied to a network device, the network device includes a first module and a second module, and the method includes:
   the network device sends configuration information of a first frequency resource to a terminal device via the second module; and
   the network device sends a first signal to the terminal device through the first frequency resource via the first module.
Embodiment 120: The method according to Embodiment 119, where the first signal includes one or more of the following: a synchronization signal, common information, and paging information, where the paging information includes information about one or more terminal devices that need to receive paging.
Embodiment 121: The method according to Embodiment 119 or 120, where the configuration information of the first frequency resource indicates a frequency domain location of the first frequency resource.
Embodiment 122: The method according to Embodiment 121, where the frequency domain location of the first frequency resource includes a location of a resource block.
Embodiment 123: The method according to any one of Embodiments 119 to 122, where the method further includes:
   the network device transmits a signal to the terminal device through a second frequency resource via the second module, where the second frequency resource is different from the first frequency resource.
Embodiment 124: The method according to any one of Embodiments 119 to 122, where that the network device sends a first signal to the terminal device through the first frequency resource via the first module includes:
   the network device sends, in a first time period, the first signal to the terminal device through the first frequency resource via the first module; and
   the method further includes:
      the network device transmits, in a second time period, a second signal to the terminal device through the first frequency resource via the second module, where the second time period is different from the first time period.
Embodiment 125: The method according to Embodiment 121, where the frequency domain location of the first frequency resource is an absolute radio frequency channel number, or the frequency domain location of the first frequency resource is a raster index of the first signal.
Embodiment 126: The method according to Embodiment 125, where the frequency domain location of the first frequency resource includes one or more of the following: a start frequency location, a center frequency location, and an end frequency location.
Embodiment 127: The method according to any one of Embodiments 119 to 126, where
   a waveform of a signal transmitted by the network device via the first module is different from a waveform of a signal transmitted by the network device via the second module, and/or a modulation scheme of the/a signal transmitted by the network device via the first module is different from a modulation scheme of the/a signal transmitted by the network device via the second module.
Embodiment 128: The method according to any one of Embodiments 119 to 127, where
   the waveform and/or the modulation scheme of the signal transmitted by the network device via the first module are/is on-off keying OOK, and/or
   the waveform and/or the modulation scheme of the signal transmitted by the network device via the second module are/is orthogonal frequency division multiplexing OFDM.
Embodiment 129: The method according to any one of Embodiments 119 to 128, where the method further includes:
   the network device sends the paging information through the first frequency resource, where the paging information includes the information about the one or more terminal devices that need to receive the paging; and
   the network device sends first information to the one or more terminal devices and/or receives a random access preamble sequence from the one or more terminal devices, where
   the first information includes one or more of the following information: paging downlink control information DCI, a paging message paging message, and a paging early indication PEI.
Embodiment 130: The method according to Embodiment 129, where that the network device sends first information to the one or more terminal devices and/or receives a random access preamble sequence from the one or more terminal devices includes:
   the network device sends the first information to the one or more terminal devices and/or receives the random access preamble sequence from the one or more terminal devices through the second frequency resource.
Embodiment 131: The method according to Embodiment 129 or 130, where
   the network device sends the paging information via the first module, and the network device sends the first information to the one or more terminal devices and/or receives the random access preamble sequence from the one or more terminal devices via the second module.
Embodiment 132: An information transmission method, where the method includes:
   a network device sends configuration information of a first frequency resource to a terminal device through a second frequency resource; and
   the network device sends a first signal to the terminal device through the first frequency resource.
Embodiment 133: The method according to Embodiment 132, where the first signal includes one or more of the following: a synchronization signal, common information, and paging information, where the paging information includes information about one or more terminal devices that need to receive paging.
Embodiment 134: The method according to Embodiment 132 or 133, where the configuration information of the first frequency resource indicates a frequency domain location of the first frequency resource.
Embodiment 135: The method according to Embodiment 134, where the frequency domain location of the first frequency resource includes a location of a resource block.
Embodiment 136: The method according to any one of Embodiments 132 to 135, where the method further includes:
   the network device transmits a signal to the terminal device through the second frequency resource, where the second frequency resource is different from the first frequency resource.
Embodiment 137: The method according to any one of Embodiments 132 to 135, where that the network device sends a first signal to the terminal device through the first frequency resource includes:
   the network device sends, in a first time period, the first signal to the terminal device through the first frequency resource; and
   the method further includes:
      the network device transmits, in a second time period, a second signal to the terminal device through the first frequency resource, where the second time period is different from the first time period.
Embodiment 138: The method according to Embodiment 134, where the frequency domain location of the first frequency resource is an absolute radio frequency channel number, or the frequency domain location of the first frequency resource is a raster index of the first signal.
Embodiment 139: The method according to Embodiment 138, where the frequency domain location of the first frequency resource includes one or more of the following: a start frequency location, a center frequency location, and an end frequency location.
Embodiment 140: The method according to any one of Embodiments 132 to 139, where
   a waveform of a signal transmitted by the network device through the first frequency resource is different from a waveform of a signal transmitted by the network device through the second frequency resource, and/or a modulation scheme of the/a signal transmitted by the network device through the first frequency resource is different from a modulation scheme of the/a signal transmitted by the network device through the second frequency resource.
Embodiment 141: The method according to any one of Embodiments 132 to 140, where
   the waveform and/or the modulation scheme of the signal transmitted by the network device through the first frequency resource are/is on-off keying OOK, and/or
   the waveform and/or the modulation scheme of the signal transmitted by the network device through the second frequency resource are/is orthogonal frequency division multiplexing OFDM.
Embodiment 142: The method according to any one of Embodiments 132 to 141, where the method further includes:
   the network device sends the paging information through the first frequency resource, where the paging information includes the information about the one or more terminal devices that need to receive the paging; and
   the network device sends first information to the one or more terminal devices and/or receives a random access preamble sequence from the one or more terminal devices, where
   the first information includes one or more of the following information: paging downlink control information DCI, a paging message paging message, and a paging early indication PEI.
Embodiment 143: The method according to Embodiment 142, where that the network device sends first information to the one or more terminal devices and/or receives a random access preamble sequence from the one or more terminal devices includes:
   the network device sends the first information to the one or more terminal devices and/or receives the random access preamble sequence from the one or more terminal devices through the second frequency resource.
Embodiment 144: A communication apparatus, including a module or a unit configured to perform the method according to any one of Embodiments 1 to 143.
Embodiment 145: A communication apparatus, including a processor, where the processor is configured to execute a computer program or instructions stored in a memory, so that the apparatus performs the method according to any one of Embodiments 1 to 143.
Embodiment 146: A computer-readable storage medium, where the computer-readable storage medium stores a computer program or instructions, and when the computer program or instructions are run on a computer, the computer is enabled to perform the method according to any one of Embodiments 1 to 143.
Embodiment 147: A computer program product, where the computer program product includes a computer program or instructions used to perform the method according to any one of Embodiments 1 to 143.
Embodiment 148: A chip, where the chip is coupled to a memory, and is configured to read and execute program instructions stored in the memory, to implement the method according to any one of Embodiments 1 to 143.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving, by a terminal device, area identification information from a network device through a first frequency resource; and
performing, by the terminal device, an area update procedure or receiving system information based on the area identification information through a second frequency resource.

2. The method according to claim 1, wherein
the area identification information comprises a tracking area identifier, and the performing, by the terminal device, an area update procedure or receiving system information based on the area identification information through a second frequency comprises: when the terminal device determines, based on the tracking area identifier, that a tracking area of the terminal device is updated, performing, by the terminal device, a tracking area update procedure through the second frequency resource;
the area identification information comprises an access network area identifier, and the performing, by the terminal device, an area update procedure or receiving system information based on the area identification information through a second frequency comprises: when the terminal device determines, based on the access network area identifier, that an access network area of the terminal device is updated, performing, by the terminal device, an access network area update procedure through the second frequency resource; or
the area identification information comprises a cell identifier, and the performing, by the terminal device, an area update procedure or receiving system information based on the area identification information through a second frequency comprises: when the terminal device determines, based on the cell identifier, that a cell of the terminal device is updated, receiving, by the terminal device through the second frequency resource, system information of a cell indicated by the cell identifier.

3. The method according to claim 1 or 2, wherein the receiving, by a terminal device, area identification information from a network device through a first frequency resource comprises:
receiving, by the terminal device, a first signal from the network device through the first frequency resource, wherein the first signal comprises the area identification information, and the first signal further comprises paging information.

4. The method according to claim 1 or 2, wherein the receiving, by a terminal device, area identification information from a network device through a first frequency resource comprises:
receiving, by the terminal device, a synchronization signal from the network device through the first frequency resource, wherein the synchronization signal comprises the area identification information.

5. The method according to claim 1 or 2, wherein the area identification information is transmitted periodically.

6. The method according to claim 5, wherein the method further comprises:
receiving, by the terminal device, a synchronization signal from the network device through the first frequency resource, wherein the synchronization signal is transmitted periodically; and
the receiving, by a terminal device, area identification information from a network device through a first frequency resource comprises:
receiving, by the terminal device, the area identification information from the network device through the first frequency resource after preset duration that passes after receiving of the synchronization signal is completed, wherein the preset duration is greater than 0 or equal to 0.

7. The method according to claim 5 or 6, wherein
a periodicity of the area identification information is the same as a periodicity of the synchronization signal; or
a periodicity of the area identification information is an integer multiple of a periodicity of the synchronization signal.

8. The method according to any one of claims 1 to 7, wherein the terminal device comprises a first module and a second module, wherein
the terminal device receives the area identification information via the first module, and the terminal device performs the area update procedure or receives the system information via the second module.

9. The method according to any one of claims 1 to 8, wherein
a waveform of the first signal is different from a waveform of a second signal, and/or a modulation scheme of the first signal is different from a modulation scheme of the second signal, wherein
the first signal is a signal that carries the area identification information and/or the paging information, and the second signal is a signal transmitted by the terminal device through the second frequency resource.

10. The method according to any one of claims 1 to 9, wherein
the waveform and/or the modulation scheme of the first signal are/is on-off keying OOK, and/or
the waveform and/or the modulation scheme of the second signal are/is orthogonal frequency division multiplexing OFDM, wherein
the first signal is the signal that carries the area identification information and/or the paging information, and the second signal is the signal transmitted by the terminal device through the second frequency resource.

11. The method according to any one of claims 1 to 10, wherein the method further comprises:
receiving, by the terminal device, the paging information from the network device through the first frequency resource, wherein the paging information comprises information about one or more terminal devices that need to receive paging, and the one or more terminal devices comprise the terminal device; and
receiving, by the terminal device, first information from the network device and/or initiating random access, wherein
the first information comprises one or more of the following information: paging downlink control information DCI, a paging message paging message, and a paging early indication PEI.

12. The method according to claim 11, wherein the receiving, by the terminal device, first information from the network device and/or initiating random access comprises:
receiving, by the terminal device, the first information from the network device and/or initiating random access through the second frequency resource.

13. The method according to claim 11 or 12, wherein the terminal device comprises the first module and the second module, wherein
the terminal device receives the area identification information and the paging information via the first module, and the terminal device receives the first information and/or initiates random access via the second module.

14. A communication apparatus, comprising a module or a unit configured to perform the method according to any one of claims 1 to 13.

15. A communication apparatus, comprising a processor, wherein the processor is configured to execute a computer program or instructions stored in a memory, so that the apparatus performs the method according to any one of claims 1 to 13.

16. A computer-readable storage medium, wherein the computer-readable storage medium stores a computer program or instructions, and when the computer program or the instructions are run on a computer, the computer is enabled to perform the method according to any one of claims 1 to 13.

17. A computer program product, wherein the computer program product comprises a computer program or instructions that are used to perform the method according to any one of claims 1 to 13.

18. A chip, wherein the chip is coupled to a memory, and is configured to read and execute program instructions stored in the memory, to implement the method according to any one of claims 1 to 13.
